# EUROPEAN PATENT APPLICATION

(11) **EP 4 576 264 A1**
(43) Date of publication of application: **25.06.2025**
(21) Application number: 24857997.1
(22) Date of filing: 26.06.2024
(51) Int. Cl.: H01M 4/587, H01M 4/38, H01M 10/0525

(54) **NEGATIVE ELECTRODE MATERIAL AND BATTERY**

(30) Priority: 29.08.2023 CN 202311101191; 29.11.2023 CN 202311605506; 07.02.2024 CN 202410172027
(71) Applicant: BTR New Material Group Co., Ltd., Shenzhen, Guangdong 518106 (CN); Dingyuan New Energy Technology Co., Ltd., Huizhou, Guangdong 516227 (CN)
(72) Inventor: CHEN, Xi, Shenzhen, Guangdong 518106 (CN); PANG, Chunlei, Shenzhen, Guangdong 518106 (CN); HE, Peng, Shenzhen, Guangdong 518106 (CN); REN, Jianguo, Shenzhen, Guangdong 518106 (CN); HE, Xueqin, Shenzhen, Guangdong 518106 (CN)
(74) Representative: Studio Torta S.p.A.
(86) International application number: PCT/CN2024/101704
(87) International publication number: WO 2025/044453

(57) **Abstract**

Provided are anode material and battery. The anode material includes a carbon material and silicon particles. The anode material has pores. An average shape coefficient of the anode material is F₀, and 0.65≤F₀<1. The average shape coefficient F₀ of the anode material is obtained through the following manners: ten anode material particles are randomly acquired, a cross-sectional area Sₙ and a circumference Cₙ of each anode material particle are measured, Fₙ=4*π*Sₙ/Cₙ², where n is selected from natural numbers from 1 to 10, an average value of shape coefficients Fₙ of the 10 particles is calculated, and the average value is recorded as the average shape coefficient Fₒ of the anode material. The anode material provided in the present disclosure is stable in structure, and the occurrence of side reactions is effectively reduced, thereby improving the cycling performance of the anode material.

## Description

This application claims priority to Chinese Patent Application No. 202311101191.6 filed to the China National Intellectual Property Administration on August 29, 2023 and entitled "Anode Material and Battery", claims priority to Chinese Patent Application No. 202311605506.0 filed to the China National Intellectual Property Administration on November 29, 2023 and entitled "Anode Material and Battery", and claims priority to Chinese Patent Application No. 202410172027.2 filed to the China National Intellectual Property Administration on February 7, 2024 and entitled "Anode Material and Battery", the disclosures of which are hereby incorporated by reference in their entirety.

### Technical Field

The present disclosure relates to the technical field of anode materials, and specifically to anode material and battery.

### Background

Lithium-ion batteries have the advantages of being large in energy density, long in cycle life, small in environmental pollution, free of memory effect, etc., and thus are widely applied to electric vehicles and consumer electronics. Due to a low theoretical specific capacity (372 mAh/g), the wide application of a traditional anode material is limited. In order to increase an energy density of the lithium-ion battery, a high-capacity anode material is started to be searched. As a theoretical specific capacity of a silicon-based anode material may reach 4200 mAh/g, the silicon-based anode material gradually becomes a research hotspot.

However, the volume expansion of the silicon-based anode material is more serious during an alloying process with lithium, and as the cycle proceeds, attenuation mechanisms such as pulverization, contact losses with conductive agents and current collectors, formation of an unstable Solid-State Electrolyte Interface (SEI), etc. occur in the silicon-based anode material, resulting in deterioration in electrochemical performance of the anode material.

A carbon material has excellent conductivity and mechanical properties, may effectively relieve the volume expansion of silicon when being combined with the silicon, or may also improve electrode conductivity and obtain a stable SEI membrane. A silicon carbon composite material is the first silicon-based anode material to be commercialized, which may shorten a transmission distance of Li⁺, facilitating improvement of the dynamic performance of the material. However, nano silicon particles have large specific surface areas, the SEI membrane tends to consume excess lithium salts, and a volume effect tends to cause electrical detachment between the particles, resulting in reduction in reversible capacity and coulombic efficiency. Furthermore, nanosized silicon particles are easy to agglomerate when being distributed in the carbon material, causing the material to have a high volume expansion effect, and even causing the material to break, thus reducing the structure stability and cycling performance of the anode material.

Therefore, a silicon carbon anode material that can have low expansion, high capacity, and excellent cycling performance is urgently required.

### Summary

The present disclosure provides anode material and battery. The anode material is stable in structure, the collapse of the structure of the anode material due to volume expansion of the silicon particles in a lithium deintercalation process is reduced, and the occurrence of side reactions is effectively reduced, thereby improving the cycling performance of the anode material.

In first aspect, the present disclosure provides an anode material. The anode material includes a carbon material and silicon particles. The anode material has pores.

An average shape coefficient of the anode material is F₀, where 0.65≤F₀ < 1.

The average shape coefficient F₀ of the anode material is obtained through the following manners.

Ten anode material particles are randomly acquired, a cross-sectional area Sₙ and a circumference Cₙ of each anode material particle are measured, Fₙ=4*π*Sₙ/Cₙ², wherein n is selected from natural numbers from 1 to 10, an average value of shape coefficients Fₙ of the 10 particles is calculated, and the average value is recorded as the average shape coefficient F₀ of the anode material.

The technical solution of the present disclosure has at least the following beneficial effects.

The anode material provided in the present disclosure includes the carbon material and the silicon particles. By controlling the shape coefficient of the anode material, obvious edges and corners of the particles may be effectively reduced, and the isotropic properties of anode material particles may be improved. In a charging and discharging process, the anode material can contract and expand relatively uniformly in a radial direction, such that the problem of stress concentration due to the volume expansion of the active substance silicon particles in the anode material may be reduced, facilitating maintaining of the stability of particle structures of the anode material, thereby reducing the pulverization of the particles of the anode material. Furthermore, the problem of stress concentration near the edges and corners due to the volume expansion of the silicon particles in the anode material may be reduced, thereby facilitating the maintaining of the stability of particle structures of the anode material.

### Detailed Description of the Embodiments

In order to better describe the present disclosure and to facilitate the understanding of the technical solutions of the present disclosure, the present disclosure is further described in detail below. However, the following embodiments are only simple examples of the present disclosure and do not represent or limit the scope of protection of the claims of the present disclosure, and the scope of protection of the present disclosure is subject to the claims.

The embodiments of the present disclosure provide an anode material. The anode material includes a carbon material and silicon particles. The anode material has pores.

An average shape coefficient of the anode material is F₀, where 0.65≤F₀ < 1.

The average shape coefficient F₀ of the anode material is obtained through the following manners.

Ten anode material particles are randomly acquired, a cross-sectional area Sₙ and a circumference Cₙ of each anode material particle are measured, Fₙ=4*π*Sn/Cₙ², where n is selected from natural numbers from 1 to 10, an average value of shape coefficients Fₙ of the 10 particles is calculated, and the average value is recorded as the average shape coefficient F₀ of the anode material.

The anode material provided in the present disclosure includes the carbon material and the silicon particles. By controlling the shape coefficient of the anode material, obvious edges and corners of the particles may be effectively reduced, and the isotropic properties of anode material particles may be improved. In a charging and discharging process of a battery prepared by the anode material, the anode material can contract and expand relatively uniformly in a radial direction, such that the problem of stress concentration due to the volume expansion of the active substance such as the silicon particles in the anode material may be reduced, facilitating maintaining of the stability of particle structures of the anode material, thereby reducing the pulverization of the particles of the anode material. Furthermore, the problem of stress concentration near the edges and corners due to the volume expansion of the silicon particles in the anode material may be reduced, thereby facilitating the maintaining of the stability of particle structures of the anode material.

Specifically, the average shape coefficient F₀ of the anode material may be 0.65, 0.66, 0.67, 0.68, 0.69, 0.70, 0.72, 0.73, 0.74, 0.75, 0.76, 0.78, 0.79, 0.8, 0.81, 0.82, 0.85, 0.89, 0.90, 0.92, 0.93, 0.94, 0.95, 0.96, 0.98, or 0.99, etc., which is not limited herein. The cross-sectional area S and circumference C of the particle may be automatically picked up by software, and the shape coefficient Fₙ is configured to represent boundary roundness of the particle. Therefore, the average shape coefficient of the anode material is controlled within a range of 0.65-1, such that the obvious edges and corners of the particles may be effectively reduced. Furthermore, the average shape coefficient of the anode material particles is maintained within the above range, gaps among the anode material particles may be reduced, and while ensuring that the anode material is fully immersed in electrolyte, a compaction density of the anode material is increased, thereby improving the cycling performance of the anode material.

In some implementations, a particle fractal dimension of the anode material is X₀, where 1 < X₀ < 3; and the particle fractal dimension X₀ of the anode material is obtained through testing by the following manners.

Ten anode material particles are randomly acquired, and the cross-sectional area Sₙ and the circumference Cₙ of each anode material particle are measured, where Xₙ=(log(Cₙ)-b)*2/log(Sₙ), b is a constant; and the cross-sectional area Sₙ and the circumference Cₙ of each anode material particle are filled in a double logarithmic table, a slope φ of a fitting line is obtained by using a least square method, and the particle fractal dimension of the anode material is X₀=2*φ.

It may be understood that, the particle fractal dimension X₀ is configured to represent the self-similarity of a particle contour, generally reflecting a change rate of lengths (e.g., the circumference) under different measurement scales (e.g., different areas). For the anode material, fractal dimension (X) of an area circumference method is used to reflect a change rule of its complexity with the particle area. When X₀=1, all the particle fractal dimensions of the anode material are the same; and when 3 > X₀ > 1, the particle fractal dimension of the anode material decreases with the increasing of the particle area, and the morphological similarity of the particles is lower. By controlling the particle fractal dimension of the anode material in the present disclosure to be within the above range, the morphological similarity of the particles is higher, that is, the particles are high in morphological uniformity.

According to the anode material provided in the present disclosure, the particle fractal dimension of the anode material is controlled, the particle fractal dimension X₀ is configured to represent the self-similarity of the particle contour, and if the morphological similarity of the particles of the anode material is higher, the particles are higher in morphological uniformity. In the charging and discharging process, the anode material can contract and expand relatively uniformly in the radial direction, such that the problem of stress concentration due to the volume expansion of the active substance silicon particles in the anode material may be reduced, facilitating the maintaining of the stability of the particle structures of the anode material, thereby reducing the pulverization of the particles of the anode material, and facilitating the reflecting of excellent electrochemical performance of the anode material in a cell.

In the present disclosure, a nitric acid solution with a concentration of 1 M is added in the anode material for soaking for 4 h; then an HF acid solution with a 20% mass fraction is added dropwise to the anode material, yellow smoke is produced, and the acid solution is repeated added dropwise for a plurality of times, until there no yellow smoke produced in the solution; and finally, the nitric acid solution with the concentration of 1 M is used again to eliminate residue, and then washing and drying are performed to obtain the anode material with the silicon particles removed.

In some implementations, when the anode material meets 0.65≤F₀ < 1, a N₂ adsorption and desorption method is used to test the anode material and the anode material with the silicon particles removed, and a ratio of a volume of nitrogen absorbed by the anode material at 90% partial pressure to a volume of nitrogen absorbed at 10% partial pressure is A, where 1.3≤A≤2.5.

A ratio of a volume of nitrogen absorbed by the anode material with the silicon particles removed at 90% partial pressure to a volume of nitrogen absorbed at 10% partial pressure is B, where 1≤B≤1.9, and A/B > 1.

It may be understood that, a physical and chemical state of the anode material with the silicon particles removed is close to a physical and chemical state of a carbon material before the silicon particles are filled, the porosity thereof is high, and the ratio of the volume P₉₀ of the nitrogen absorbed by the anode material with the silicon particles removed at the 90% partial pressure to the volume P₁₀ of the nitrogen absorbed at the 10% partial pressure is between 1 and 1.9. The ratio of the volume P₉₀ of the nitrogen absorbed by the anode material with the silicon particles removed at the 90% partial pressure to the volume P₁₀ of the nitrogen absorbed at the 10% partial pressure is between 1.3 and 2.5, and since the silicon particles fill a large number of aperture gaps in the carbon material, especially micropores, a pore volume of the anode material is significantly reduced, and mainly based on mesopores and macropores, an A value increases.

In some implementations, when the anode material meets 0.65≤F₀ < 1, gas production of anode slurry that is prepared by the anode material and placed in a 25 °C environment for 24 hours is ≤1 mL/g, and the gas production of the anode slurry that is prepared by the anode material and placed in a 45 °C environment for 24 hours is ≤2 mL/g.

A method for testing a gas production value includes: Carboxymethyl Cellulose (CMC) is dispersed in water according to a mass ratio of 1.4% for gluing, and after uniform dispersion, 10 g of glue liquid and 10 g of the anode material are mixed to obtain slurry; the slurry is put into an aluminum plastic film bag, and the mass of the slurry is recorded; then sealing is performed to form a sealed aluminum plastic film bag, the sealed aluminum plastic film bag is fixed at a bottom of a container and completely soaked in water, and a volume of the aluminum plastic film bag is recorded; after 24 h of fixation, the volume of the aluminum plastic film bag is recorded again; and gas production of a silicon anode material is calculated according to changes in a volume of an aluminum plastic film, in mL/g.

In some implementations, the average pore diameter of the anode material is 0.5 nm-50 nm. Exemplarily, the average aperture of the pores of the anode material may be 0.5 nm, 0.8 nm, 1.0 nm, 1.3 nm, 1.5 nm, 1.8 nm, 2.0 nm, 3.0 nm, 4.0 nm, 5.0 nm, 8.0 nm, 10.0 nm, 15 nm, 20 nm, 25 nm, 30 nm, 40 nm, or 50 nm, etc., which is not limited herein. The average aperture of the pores of the anode material is controlled, such that while the rate performance of the anode material is improved, the volume expansion of the silicon particles is buffered, and the structure stability of the anode material is improved. Preferably, the average aperture of the pores of the anode material is 0.5 nm-20 nm. Further preferably, the average aperture of the pores of the anode material is 1.6 nm-5 nm.

In some implementations, the average aperture of the pores of the anode material with the silicon particles removed is 1.7 nm-2.2 nm, which may specifically be 1.7 nm, 1.8 nm, 1.9 nm, 2.0 nm, 2.1 nm, or 2.2 nm, etc., and is not limited herein. When apertures of pores of the carbon material are too small, gaseous precursors of the silicon particles difficultly penetrate into the pores, and easily aggregate on a surface of the carbon material to form a shell structure, leading to reduction in contents of the silicon particles inside the anode material, thus causing a specific capacity of the anode material to reduce; and when the apertures of the pores of the carbon material are too large, although the silicon particles are filled, the problems of uneven distribution of the silicon particles, silicon segregation, etc. may be caused, leading to uneven expansion of the anode material, too large local expansion stress, particle breakage, etc., and thus resulting in reduction in the electrochemical performance of the anode material. Therefore, by controlling the average aperture of the pores of the carbon material to be within the above range, the combination of the carbon material and the silicon particles is facilitated, while the rate performance of the anode material is improved, the volume expansion of the silicon particles is buffered, and the structure stability of the anode material is improved.

In some implementations, a total pore volume of the anode material is 0.001 cm³/g-0.4 cm³/g. The total pore volume of the anode material may specifically by 0.001 cm³/g, 0.002 cm³/g, 0.005 cm³/g, 0.008 cm³/g, 0.01 cm³/g, 0.02 cm³/g, 0.03 cm³/g, 0.04 cm³/g, 0.05 cm³/g, 0.06 cm³/g, 0.07 cm³/g, 0.08 cm³/g, 0.09 cm³/g, 0.1 cm³/g, 0.2 cm³/g, or 0.4 cm³/g, etc., and may definitely be other values within the above range, which is not limited herein. Preferably, the total pore volume of the anode material is 0.001 cm³/g-0.1 cm³/g.

In some implementations, a total pore volume of the anode material with the silicon particles removed is 0.2 cm³/g-2.0 cm³/g, which may specifically be 0.2 cm³/g, 0.3 cm³/g, 0.4 cm³/g, 0.5 cm³/g, 0.6 cm³/g, 0.9 cm³/g, 1.0 cm³/g, 1.2 cm³/g, 1.5 cm³/g, 1.8 cm³/g, 1.9 cm³/g, 1.95 cm³/g, or 2 cm³/g, etc., or may definitely be other values within the above range, and is not limited herein. Compared to the anode material with the silicon particles removed, the pore volume of the anode material containing the silicon particles is significantly reduced, indicating that the compactness of the anode material is increased, such that the specific capacity of the anode material can be effectively increased. In the present disclosure, by controlling the total pore volumes of the anode material filled with the silicon particles and the anode material with the silicon particles removed within the above range, the specific capacity of the anode material may be increased, and it may also ensure that the anode material can reserve appropriate aperture gaps to relieve the volume expansion of the silicon particles in a lithium deintercalation process, thereby improving the cycling performance of the anode material. Preferably, the total pore volume of the anode material with the silicon particles removed is 0.5 cm³/g-2.0 cm³/g.

In some implementations, the pores of the anode material with the silicon particles removed include micropores, and a volume proportion of the micropores in all the pores is ≥80%. Specifically, the volume proportion of the micropores with apertures below 2.0 nm in all the pores may be 80%, 81%, 82%, 83%, 84%, 85%, 87%, 88%, 90%, 92%, 93%, 95%, 98%, or 99%, etc., which is not limited herein. It may be understood that, the pores of the anode material with the silicon particles removed are mainly based on the micropores. Aperture distribution within the range promotes the deposition of the silicon particles in a deposition process, and facilitates adjustment of sizes of the silicon particles, so as to reduce silicon segregation, thereby improving excessive local expansion stress of the anode material while improving the compactness of the anode material.

In some implementations, in the anode material with the silicon particles removed, a volume proportion of the pores with apertures below 5.0 nm in the total pore volume is ≥90%. Specifically, the volume proportion of the pores with apertures below 5.0 nm in all the pores may be 80%, 81%, 82%, 83%, 84%, 85%, 87%, 88%, 90%, 92%, 93%, 95%, 98%, or 99%, etc., which is not limited herein. It may be understood that, the pores of the anode material (carbon material) with the silicon particles removed are mainly based on the pores below 5.0 nm. Aperture distribution within the range promotes formation of a channel for gas-phase mass transfer inside the carbon material during the deposition process, so as to improve an internal diffusion environment of the carbon material, thereby improving the compactness of the anode material.

In some implementations, the porosity of the anode material with the silicon particles removed is 40%-60%. Specifically, the porosity may be 40%, 45%, 48%, 50%, 52%, 55%, 56%, 57%, 58%, or 60%, etc., or may definitely be other values within the above range, which is not limited herein.

In some implementations, the pores of the anode material include at least one of micropores, mesopores, and macropores.

In some implementations, a volume proportion of the micropores in all the pores is ≤5%, which may specifically be 5%, 4%, 3%, 2.5%, 2%, 1.5%, 1%, 0.5%, or 0.1%, etc., and is not limited herein.

In some implementations, a volume proportion of the mesopores in all the pores is 87%-97%, which may specifically be 87%, 88%, 89%, 90%, 92%, 93%, 94%, 95%, 96%, or 97%, etc., or may definitely be other values within the above range, and is not limited herein.

In some implementations, a volume proportion of the macropores in all the pores is ≤13%, which may specifically be 13%, 12%, 11%, 10%, 9%, 8%, 7%, 6%, 5%, 4%, 3%, or 1%, etc., or may definitely be other values within the above range, and is not limited herein.

It may be understood that, since the silicon particles fill a large number of aperture gaps of the carbon material, especially the micropores, the pores of the anode material are mainly based on the mesopores and the macropores.

In some implementations, a specific surface area of the anode material with the silicon particles removed is 1300 m²/g-2500 m²/g. Specifically, a specific surface area of the carbon material may be 1300 m²/g, 1500 m²/g, 2000 m²/g, 2100 m²/g, 2200 m²/g, 2300 m²/g, 2400 m²/g, or 2500 m²/g, etc., or may definitely be other values within the above range, which is not limited herein.

In some implementations, the tap density of the anode material with the silicon particles removed is ≥0.30 g/cm³, which may specifically be 0.4 g/cm³, 0.5 g/cm³, 0.6 g/cm³, 0.7 g/cm³, 0.8 g/cm³, 0.9 g/cm³, 1.0 g/cm³, 1.10 g/cm³, 1.20 g/cm³, 1.30 g/cm³, 1.40 g/cm³, or 1.50 g/cm³, and is not limited herein. It may be understood that, the carbon material has a large number of pores, the presence of the pores causes the density of the carbon material to reduce, and sufficient aperture gaps facilitate the deposition of the silicon particles.

In some implementations, the tap density of the anode material is 0.5 g/cm³-1.5 g/cm³, which may specifically be 0.5 g/cm³, 0.6 g/cm³, 0.7 g/cm³, 0.8 g/cm³, 0.9 g/cm³, 1.0 g/cm³, 1.1 g/cm³, 1.2 g/cm³, 1.3 g/cm³, 1.4 g/cm³, or 1.5 g/cm³, etc., or may definitely be other values within the above range, and is not limited herein. It may be seen that, since the silicon particles fill the pores of the carbon material, the compactness of the carbon material is improved, such that the tap density of the anode material is increased by 80%-120% compared to an initial carbon material.

In some implementations, the carbon material includes at least one of the following materials of amorphous carbon, crystalline carbon, and mesocarbon microbeads. The carbon material may improve the conductivity of the anode material.

In some implementations, at least a portion of the silicon particles are filled in the pores of the carbon material. It may be understood that, the silicon particles fill the pores of the carbon material, ensuring a diffuse distribution of the silicon particles with the carbon material. On the one hand, the specific capacity of the anode material is improved, and on the other hand, the aperture gaps of the carbon material filled with the silicon particles are reduced, such that the density of the anode material may be increased, and the occurrence of side reactions between the anode material and electrolyte is effectively reduced, thereby further improving the cycling performance of the material.

In some implementations, the silicon particle includes at least one of amorphous silicon, crystalline silicon, silicon oxide, silicon alloy, or a complex of the crystalline silicon and the amorphous silicon. Specifically, the silicon alloy may be silicon lithium alloy, silicon magnesium alloy, etc. Definitely, it is to be noted that, in some cases, the silicon alloy includes elemental silicon particles and alloy.

In some implementations, the silicon particle includes the amorphous silicon. It may be understood that, the amorphous silicon expands isotropically in a lithium deintercalation process, such that the collapse of the pore structure in the anode material may be reduced, and the specific capacity of the anode material is inhibited from rapidly declining, thereby improving the lithium intercalation cycling performance of the anode material.

In some implementations, the anode material may further include other active materials, and the active materials refer to substances that may react with lithium to perform lithium intercalation and deintercalation. Specifically, the active materials include at least one of the materials of Li, Na, K, Sn, Ge, Fe, Mg, Ti, Zn, Al, P, and Cu. The active materials may include metallic elements.

In some implementations, the active materials may specifically be Sn, Ge, or Al. In some other implementations, the active materials may also be silicon lithium alloy, silicon magnesium alloy, etc. Definitely, it is to be noted that, in some cases, the active materials include elemental particles and alloy.

In some implementations, the average particle size of the silicon particles is < 50 nm. Specifically, the average particle size of the silicon particles may be 1 nm, 2 nm, 3 nm, 4 nm, 5 nm, 10 nm, 15 nm, 20 nm, 25 nm, 30 nm, 35 nm, 40 nm, 45 nm, 46 nm, 47 nm, 48 nm, or 49 nm, etc., which is not limited herein. The average particle size of the silicon particles: the silicon particles are observed by a field emission scanning electron microscopy or a transmission electron microscope, the particle sizes of 5-10 silicon particles are directly measured by a scale, and an average value of the particle sizes is the average particle size of the silicon particles.

In some implementations, the mass proportion of carbon in the anode material is 40%-80%, which may specifically be 40%, 50%, 60%, 70%, or 80%, etc., or may definitely be other values within the above range, and is not limited herein. Preferably, the mass proportion of the carbon in the anode material is 40%-60%.

In some implementations, the mass proportion of silicon in the anode material is 20%-55%, which may specifically be 20%, 25%, 30%, 35%, 40%, 45%, 50%, or 55%, etc., or may definitely be other values within the above range, and is not limited herein. Preferably, the mass content of the silicon in the anode material is greater than 35% and less than 55%.

In some implementations, the mass ratio of the silicon to the carbon in the anode material is 0.9-1.10, which may specifically be 0.9, 0.92, 0.95, 0.98, 1.0, 1.01, 1.02, 1.05, 1.07, 1.08, or 1.10, etc., and is not limited herein. The mass ratio of the silicon to the carbon in the anode material is ≤0.9, the specific capacity of the anode material reduces, but the overall cycling performance is improved. The mass ratio of the silicon to the carbon in the anode material is ≥1.1, and the specific capacity of the anode material increases with the increasing of the silicon content. However, the silicon has a significant volume expansion effect, affecting the cycling performance of the anode material. By controlling the mass ratio within the above range, the comprehensive specific capacity and cycling stability of the anode material are improved.

In some implementations, the mass content of oxygen in the anode material is ≤6%. Specifically, the mass content of oxygen in the anode material may be 1%, 2%, 3%, 4%, 5%, or 6%, etc., which is not limited herein. It may be understood that, if the mass proportion of the oxygen is too high, the active substances (e.g., silicon) in the anode material are partially oxidized, and at least portion of the pores are damaged, affecting the cycling stability of the material. By controlling the mass proportion of the oxygen in the anode material to be within the above range, it may ensure that a large amount of inactive SiO₂ is not generated in the material, which leads to a reduction in the cycling performance of the anode material. Because of the presence of small amounts of the oxygen, side reactions between the electrolyte and the silicon particle may be reduced by using surface passivated silicon oxides. Preferably, the mass content of oxygen in the anode material is ≤5%.

In some implementations, the mass content of water in the anode material is ≤5%, which may specifically be 5%, 4%, 3%, 2.5%, 2%, 1.5%, 1.0%, or 0.5%, etc., and is not limited herein.

In some implementations, the ash content of the anode material is ≤1, which may specifically be 1%, 0.9%, 0.8%, 0.6%, 0.5%, 0.4%, 0.2%, or 0.1%, etc., and is not limited herein.

In some implementations, a specific surface area of the anode material is 0.5 m²/g-10 m²/g. Specifically, the specific surface area of the anode material may be 0.5 m²/g, 1 m²/g, 2 m²/g, 3 m²/g, 4 m²/g, 5 m²/g, 6 m²/g, 7 m²/g, 8 m²/g, 9 m²/g, 400 m²/g, or 10 m²/g, etc., or may definitely be other values within the above range, which is not limited herein. Preferably, the specific surface area of the anode material is 1 m²/g-10 m²/g.

In some implementations, in an aqueous solution of the anode material, Fe≤100 ppm, Na≤50 ppm, K≤100 ppm,

Cu≤25 ppm, Cr≤20 ppm, Co≤1 ppm, Ni≤5 ppm, Al≤5 ppm, Bi≤2 ppm, Mg≤5 ppm, Pb≤1 ppm, Sb≤1 ppm, Sn≤10 ppm, Ti≤1 ppm, V≤1 ppm, and S≤20 ppm. Since metal impurity ions such as iron, nickel, sodium, aluminum salts, etc. have a reduction potential lower than lithium ions, the metal impurity ions are first embedded in an anode in a charging process, causing positions of the lithium ions embedded in the anode to reduce to affect a battery capacity of the anode material, thus resulting in reduction in the reversible capacity of a lithium battery. Metal impurity ions such as iron, copper, zinc, etc. may cause self-discharge, and deposited iron ions are also prone to puncture a diaphragm, causing micro-short-circuit, thus triggering safety issues. Furthermore, due to the precipitation of the metal impurity ions, an effective passivation layer cannot be formed on an electrode surface, resulting in damage to the entire battery. Therefore, the electrochemical performance of the anode material is improved by controlling the contents of the above metal impurities.

In some implementations, in the aqueous solution of the anode material, Li≤5 ppm, Mn≤20 ppm, Na≤10 ppm, Ca≤20 ppm, K≤1 ppm, and Sr≤1 ppm. By controlling the residual amounts of various types of impurities, the purity of the anode material may be guaranteed, so as to reduce the impact of the impurities on the electrochemical performance of the anode material.

In some implementations, for a particle size D₅₀ of the anode material, 2µm≤D₅₀≤20µm, and 0.9≤(D₉₀-D₁₀)/D₅₀≤5. Specifically, a ratio of (D₉₀-D₁₀)/D₅₀ may specifically be 0.9, 1.0, 1.1, 1.3, 1.5, 1.6, 1.7, 2.0, 2.5, 3.0, 3.5, 4.0, 4.5, or 5, etc., which is not limited herein. It may be understood that, if the particle size of the anode material is larger, a diffusion path of the lithium ions is longer. Fractures and other defects are unavoidable in a lattice structure of Si/C, these defects increase with the expansion and contraction changes in the lattice structure during charging, the probability that the lithium ions encounter these defects when diffusing in large particles is greater, and a dynamic process of diffusion is more difficult, resulting in more irreversible lithium compared to diffusion in small particles. There are more defects in smaller particles, increasing the resistance of diffusion of the lithium ions, and causing partial active lithium ions to be unable to be smoothly detached during charging and discharging, thereby increasing irreversible capacities; and fine particles also increase a contact area between the electrode and the electrolyte, which is bad for the cycling performance of the battery. By integrating factors of the above two aspects, the anode material achieved better electrochemical performance within the above range. Furthermore, the anode material is prepared into an anode sheet. When the anode sheet is used in a battery, local current density of the anode sheet at an early stage of discharging is uniformly distributed, and at a late stage of discharging, there is a large difference in the local current densities of the particles with different sizes, the overpotential of large particles is large, that is, there is significant polarization. Therefore, increased polarization caused by the large-size particles at the late stage of discharging may be reduced by controlling the granularity of the anode material particles to be uniformly distributed. Preferably, D₁₀≥1.5 µm, 5 µm≤D₅₀≤9 µm, D₉₀≤20 µm, and 0.9≤(D₉₀-D₁₀)/D₅₀≤1.7.

In some implementations, 0.7≤F₀ < 1. It may be understood that, the particles of the anode material are closer to spherical particles, which may improve the isotropic properties of anode material particles. During charging and discharging, the anode material can contract and expand relatively uniformly in a radial direction, such that the problem of stress concentration due to the volume expansion of the active substance in the anode material may be reduced, facilitating the maintaining of the stability of particle structures of the anode material, thereby reducing the pulverization of the particles. Considering preparation costs, preferably, 0.7≤F₀≤0.8.

In some implementations, when 0.7≤F₀ < 1, the specific surface area of the anode material is S1 m²/g, and the total pore volume of the anode material is P1 cm³/g, where C1=S1/(P1 *100), and 8≤C1≤20.

In the present disclosure, the anode material meets 8≤C1≤20 while 0.7≤F₀ < 1. By controlling the specific surface area and total pore volume of the anode material, the anode material has an appropriate pore volume. The anode material has an enough space to relieve the volume expansion of the silicon particles in the anode material, thereby reducing the occurrence of a side reaction between the negative electrode material and the electrolytic solution due to an excessive specific surface area of the negative electrode material, and the performance of various aspects of the anode material is comprehensively improved. According to the anode material of the present disclosure, by controlling the surface morphology of the anode material and the distribution of the pores inside the anode material, through a synergistic effect of the two, the volume expansion of the silicon particles can be better relieved, so as to improve the strength, structure stability, and cycling performance of the anode material, thereby comprehensively improving the performance of various aspects of the anode material.

Specifically, a value of C1 may specifically be 8, 9, 10, 11, 12, 15, 16, 18, or 20, etc., which is not limited herein. The total pore volume and the specific surface area are very important parameters to characterize the performance of the anode material. The total pore volume is closely related to the specific surface area. If the total pore volume is larger, there are more pores of the anode material, and the specific surface area is larger, such that the carbon material has a higher tendency to adsorb gaseous precursors (e.g., silicon source gases) of the silicon particles, and the gaseous precursors of the silicon particles are more susceptible to a decomposition deposition reaction in the pores of the carbon material. However, if the specific surface area of the anode material is larger, the strength and hardness of the anode material particles reduce, and the side reactions of the anode material are increased, leading to a reduction in the cycling stability of a battery prepared by the anode material. When the C1 value of the anode material is too large, the total pore volume of the anode material is too small, or the specific surface area of the anode material is too large, it indicates that the loading amount of the active substances in the anode material is reduced due to too few aperture gaps and relatively-large aperture of the anode material, and meanwhile, it is not advantageous to relieving the volume expansion of the anode material during charging and discharging, thus causing the capacity, rate performance, and cycling performance of the anode material to reduce. When the C1 value of the anode material is too small, the total pore volume of the anode material is too large or the specific surface area of the anode material is too small, it indicates that the anode material has too many aperture gaps and a relatively-small aperture, the structure stability of the anode material is reduced, and the anode material is easy to collapse during charging and discharging, resulting in a reduction in the cycling performance of the anode material, and leading to an increase in the side reactions between the anode material and the electrolyte and an increase in active lithium ions consumed, thus causing the first efficiency of the anode material to reduce.

In some implementations, when 0.7≤F₀ < 1, the specific surface area of the anode material with the silicon particles removed is S2 m²/g, and the total pore volume of the anode material with the silicon particles removed is P2 cm³/g, where C2=S2/(P2*100), and 10≤C2≤25. Specifically, a value of C2 may specifically be 10, 12, 13, 14, 15, 18, 20, 21, 23, or 25, etc., or may definitely be other values within the above range, which is not limited herein. By controlling the C2 of the anode material (i.e., the carbon material) with the silicon particles removed to be within the above limiting range, thereby facilitating the total pore volume and specific surface area of the carbon material are controlled to be in a balanced state, such that there are more micropores and the mesopores ( < 5 nm) with small apertures inside the carbon material. Therefore, the loading amount and distribution uniformity of the silicon particles in the carbon material are improved, local stress concentration is reduced, and the volume expansion of the active substances during charging and discharging is relieved, thereby facilitating the maintaining of the morphology of the carbon material during charging and discharging. According to the anode material of the present disclosure, by controlling the surface morphology of the carbon material and the distribution of the pores inside the carbon material, through a synergistic effect of the two, the morphology of the anode material particles during charging and discharging is maintained, the breakage of the anode material particles is reduced, and the volume expansion of the silicon particles can also be better relieved, so as to improve the strength, structure stability, and cycling performance of the anode material, thereby comprehensively improving the performance of various aspects of the anode material.

In some implementations, when 0.7≤F₀ < 1, the tap density of the anode material is 0.8 cm³/g-1.3 cm³/g, which may specifically be 0.8 g/cm³, 0.9 g/cm³, 1.0 g/cm³, 1.2 g/cm³, or 1.3 g/cm³, etc., or may definitely be other values within the above range, and is not limited herein. It may be seen that, since the silicon particles and/or other active substances fill the pores of the carbon material, the tap density of the anode material is increased by 80%-120% compared to an initial carbon material.

In some implementations, when 0.65≤F₀ < 0.7, in this case, although the average shape coefficient F₀ of the anode material is reduced, edges and corners of surfaces of the anode material particles tend to be flat, or there are no obvious edges and corners. During charging and discharging, the anode material can contract and expand relatively uniformly in the radial direction, such that the problem of stress concentration near the edges and corners due to the volume expansion of the silicon particles in the anode material may be reduced, facilitating the maintaining of the stability of particle structures of the anode material, thereby reducing the pulverization of the particles. Furthermore, the average shape coefficient of the anode material is maintained within the above range, such that gaps among the anode material particles may be reduced, facilitating the increasing of the compaction density of the anode material, thereby improving the cycling performance of the anode material.

In some implementations, when 0.65≤F₀ < 0.7, an oil absorption value of the anode material is Q₁ mL/100g, and 30≤Q₁≤80; an oil absorption value of the anode material with the silicon particles removed is Q₂ mL/100g, and 120≤Q₂≤200; and (Q₂-Q₁)/Q₁ > 0.5. Specifically, a value of Q₁ may be 30, 32, 35, 40, 45, 50, 55, 60, 65, 70, 75, or 80, etc., which is not limited herein. Specifically, a value of Q₂ may be 120, 130, 140, 150, 160, 170, 180, 190, or 200, etc., which is not limited herein. A value of (Q₂-Q₁)/Q₁ may specifically be 0.51, 0.55, 0.6, 0.7, 0.8, 0.9, 0.95, 1.0, 1.2, 1.5, 1.8, 2.0, or 3, etc., and may definitely be other values within the above range.

In the present disclosure, by controlling (Q₂-Q₁)/Q₁ > 0.5, if aperture gaps in a common material are more advanced, the oil absorption value is larger. Herein, by limiting changes in the oil absorption values in the material before and after deposition, the aperture gaps in the material are limited to be effectively filled, thereby indirectly reflecting the uniform diffuse distribution of the silicon particles and the carbon materials within the material. The anode material with the silicon particles removed, that is, before the anode material is filled with the silicon particles, has advanced aperture gaps, such that the oil absorption values of the anode material before and after the silicon particles are filled are changed. In an electrochemical device, lithium ion deintercalation not only needs a diffusion channel and a reaction interface, but also needs the electrolyte as a medium. The applicant, according to experimental exploration, improves the filling of the silicon particles while ensuring that the anode material has excellent immersion performance, such that the specific capacity of the anode material may be increased, thereby causing the anode material to have a high specific capacity and excellent immersion performance.

In some implementations, when 0.65≤F₀ < 0.7, the compaction density of the anode material is 0.80 cm³/g-1.30 cm³/g, which may specifically be 0.8 cm³/g, 0.9 cm³/g, 1.0 cm³/g, 1.05 cm³/g, 1.1 cm³/g, 1.2 cm³/g, 1.25 cm³/g, or 1.3 cm³/g, etc., or may definitely be other values within the above range, and is not limited herein. By controlling the compaction density of the anode material to be within the above range, an energy density of the anode material is increased, thereby improving the cycling performance of the anode material.

In some implementations, when 0.65≤F₀ < 0.7, the powder conductivity of the anode material at 20 kN is 0.5 S/cm-2 S/cm, which may specifically be 0.5 S/cm, 0.6 S/cm, 0.71 S/cm, 0.75 S/cm, 0.79 S/cm, 0.8 S/cm, 0.9 S/cm, 1.0 S/cm, 1.1 S/cm, 1.2 S/cm, 1.4 S/cm, 1.5 S/cm, 1.8 S/cm, or 2.0 S/cm, or may definitely be other values within the above range, and is not limited herein. Preferably, the powder conductivity of the anode material at 20 kN is greater than 0.7 S/cm and less than 1.5 S/cm.

In second aspect, the present disclosure further provides a method for preparing an anode material. A Chemical Vapor Deposition (CVD) process is used. CVD is to place a carbon material into one or more precursor gases, react and/or decompose the precursor gases on a surface of the carbon material under set temperature and pressure conditions, so as to generate a desired sediment, thereby obtaining a high-performance anode material.

The preparation method specifically includes the following step.

At S10, the carbon material having pores is provided.

In some implementations, a process of preparing the carbon material includes the following steps: a certain amount of phenolic resin for carbon is weighed, added to a surfactant Span85, and then well mixed, a mass ratio of the phenolic resin to the surfactant is < 6:1, a dispersion ratio (which is defined as a mass ratio of the phenolic resin to 201 methyl-silicone oil (used as a dispersing agent)) is 0.08-0.12, then the 201 methyl-silicone oil is added, and the mixture is well mixed and stirred and then placed in a three-necked flask. After well stirring, a temperature is heated to a curing temperature of 120-150 °C, and a reaction is performed at a constant temperature for a certain period of time (60 min) and then cooled to room temperature. The 201 methyl-silicone oil is taken out by using a Soxhlet extractor, so as to obtain phenolic resin microspheres. The phenolic resin microspheres are put into a box furnace, and carbonization is performed for 0.5-2.5 h at 500-900 °C, so as to obtain a carbonized material. The carbonized material is heated to 500-800 °C, and activated for 2-10 h with water vapor, so as to obtain activated carbon. An activated carbon furnace is heated to 400-600 °C at a speed of 2-10 °C/min, a deposition pressure is 0.05-10 kPa, a deposition time is 2-1000 h, and the flow of a silicon source gas is 0.1-10 L/min.

In some other implementations, the process of preparing the carbon material includes the following steps: a carbon source precursor is placed in a crusher for crushing, ground in an automatic mortar, then sieved to below 45 µm, and then placed in a vacuum freeze dryer for freeze-drying for 24 h. The freeze-dried carbon source precursor is placed in a tube furnace, treated for 120 min at 750 °C under an argon atmosphere, then soaked with dilute hydrochloric acid (10wt%) for 6 h to remove inorganic impurities in the carbon source precursor, then washed with deionized water and anhydrous ethanol until filtrate is neutral, and placed in a 60 °C blast oven for full drying, so as to obtain an intermediate. The intermediate is placed in a quartz boat, and placed in the middle of a quartz tube of the tube furnace. Before heating is performed, high-purity argon is introduced for 30 min to remove the air in the tube, then the temperature is heated to 700 °C-1300 °C at a heating rate of 10 °C/min, primary carbonization treatment is performed at a constant temperature for 1 h, and then the temperature is cooled to room temperature to obtain the carbonized material. Finally, the carbonized material and a mixture of a sodium hydroxide solution with a concentration of 0.2 g/mol-0.5 g/mol or a potassium hydroxide solution are dried, then the temperature is heated to 800 °C-900 °C for secondary carbonization treatment, the secondary carbonization product is placed in a hydrochloric acid solution for soaking, after acid pickling, ethanol or deionized water is required to continuously perform ultrasonic washing on the acid-leached product, until washing water is neutral, solid-liquid separation is performed, the temperature is hated to 70 °C-90 °C for drying, and ball-milling fluidized bed airflow pulverization is performed on the dried carbon material, that is, a gas is used to impact the carbon material to cause carbon material particles to reach a preset particle size, so as to obtain the carbon material.

In other implementations, the carbon material may be purchased directly from existing carbon materials that meet requirements.

In some implementations, the specific surface area of the carbon material is S2' m²/g, and the total pore volume of the anode material with the silicon particles removed is P2' cm³/g, where C2'=S2'/(P2'*100), and 10≤C2'≤25. Specifically, a value of C2' may specifically be 10, 12, 13, 14, 15, 18, 20, 21, 23, or 25, etc., or may definitely be other values within the above range, which is not limited herein. By controlling the C2' of the carbon material to be within the above limiting range, the total pore volume and specific surface area of the carbon material are controlled to be in a balanced state, such that there are more micropores and the mesopores ( < 5 nm) with small apertures inside the carbon material. Therefore, the loading amount and distribution uniformity of the silicon particles in the carbon material are improved, local stress concentration is reduced, and the volume expansion of the active substances during charging and discharging is relieved, thereby facilitating the maintaining of the morphology of the carbon material during charging and discharging.

In some implementations, an oil absorption value of the carbon material is Q2' mL/100g, and 120≤Q2'≤200. Specifically, the value of Q2' may be 120, 130, 140, 150, 160, 170, 180, 190, or 200, etc., which is not limited herein.

In some implementations, a ratio of a volume of nitrogen absorbed by the carbon material at 90% partial pressure to a volume of nitrogen absorbed at 10% partial pressure is B', where 1≤B'≤1.9. A value of B' may specifically be 1, 1.2, 1.3, 1.4, 1.5, 1.6, 1.7, 1.8, or 1.9, etc., which is not limited herein. It may be understood that, before the carbon material is filled with the silicon particles, the porosity is high, and an aperture size is relatively large, facilitating uniform deposition of the active substances in the pores.

In some implementations, an average aperture of the pores of the carbon material is 1.7 nm-2.2 nm, which may specifically be 1.7 nm, 1.8 nm, 1.9 nm, 2.0 nm, 2.1 nm, or 2.2 nm, etc., and is not limited herein. When apertures of pores of the carbon material are too small, gaseous precursors (e.g., silicon oxygen gases) of the active substances difficultly penetrate into the pores, leading to reduction in contents of the active substances in the anode material, thus causing the specific capacity of the anode material to reduce; and when the apertures of the pores of the carbon material are too large, although the active substances are filled, the problems of uneven distribution of the active substances, segregation, etc. may be caused, leading to uneven expansion of the anode material, too large local expansion stress, particle breakage, etc., and thus resulting in reduction in the electrochemical performance of the anode material. Therefore, by controlling the average aperture of the pores of the carbon material to be within the above range, the combination of the carbon material and the active substances is facilitated, while the rate performance of the anode material is improved, the volume expansion of the active substances is buffered, and the structure stability of the anode material is improved.

In some implementations, a total pore volume of the carbon material is 0.2 cm³/g-2.0 cm³/g, which may specifically be 0.2 cm³/g, 0.3 cm³/g, 0.4 cm³/g, 0.5 cm³/g, 0.6 cm³/g, 0.9 cm³/g, 1.0 cm³/g, 1.2 cm³/g, 1.5 cm³/g, 1.8 cm³/g, 1.9 cm³/g, 1.95 cm³/g, or 2.0 cm³/g, etc., or may definitely be other values within the above range, and is not limited herein. Preferably, the total pore volume of the anode material with the silicon particles removed is 0.5 cm³/g-2.0 cm³/g.

In some implementations, in the carbon material, a volume proportion of the micropores with apertures below 2.0 nm in the total pore volume is≥80%. Specifically, the volume proportion of the micropores with apertures below 2.0 nm in all the pores may be 80%, 81%, 82%, 83%, 84%, 85%, 87%, 88%, 90%, 92%, 93%, 95%, 98%, or 99%, etc., which is not limited herein. It may be understood that, the pores of the carbon material are mainly based on the micropores. Aperture distribution within the range promotes the deposition of the silicon particles in a deposition process, and facilitates adjustment of sizes of the silicon particles, so as to reduce silicon segregation, thereby improving excessive local expansion stress while improving the compactness of the anode material.

In some implementations, in the carbon material, a volume proportion of the pores with apertures below 5.0 nm in the total pore volume is≥90%. Specifically, the volume proportion of the pores with apertures below 5.0 nm in all the pores may be 80%, 81%, 82%, 83%, 84%, 85%, 87%, 88%, 90%, 92%, 93%, 95%, 98%, or 99%, etc., which is not limited herein.

In some implementations, in the carbon material, the volume proportion of the pores with apertures below 1.5 nm in the total pore volume is 20%-25%, and the volume proportion of the pores with apertures below 1.6 nm in the total pore volume is 20%-50%. It may be understood that, the pores of the carbon material are mainly based on the micropores. Aperture distribution within the range promotes formation of a channel for gas-phase mass transfer inside the carbon material during the deposition process, so as to improve an internal diffusion environment of the carbon material, thereby improving the compactness of the anode material.

In some implementations, the porosity of the carbon material is 40%-60%. Specifically, the porosity may be 40%, 45%, 48%, 50%, 52%, 55%, 56%, 57%, 58%, or 60%, etc., or may definitely be other values within the above range, which is not limited herein.

In some implementations, the specific surface area of the carbon material is 1300 m²/g-2500 m²/g. Specifically, a specific surface area of the carbon material may be 1300 m²/g, 1500 m²/g, 2000 m²/g, 2100 m²/g, 2200 m²/g, 2300 m²/g, 2400 m²/g, or 2500 m²/g, etc., or may definitely be other values within the above range, which is not limited herein.

In some implementations, a tap density of the carbon material is ≥0.30 g/cm³, which may specifically be 0.4 g/cm³, 0.5 g/cm³, 0.6 g/cm³, 0.7 g/cm³, 0.8 g/cm³, 0.9 g/cm³, 1.0 g/cm³, 1.10 g/cm³, 1.20 g/cm³, 1.30 g/cm³, 1.40 g/cm³, or 1.50 g/cm³, and is not limited herein. It may be understood that, the carbon material has a large number of pores, the presence of the pores causes the density of the carbon material to reduce, and sufficient aperture gaps facilitate the deposition of the silicon particles.

In some implementations, the carbon material includes at least one of amorphous carbon, crystalline carbon, and mesocarbon microbeads. The carbon material may improve the conductivity of the anode material.

In some implementations, a pH value of the carbon material is 6-9, which may specifically be 6, 6.5, 7, 7.5, 8, 8.5, or 9, etc., and is not limited herein.

In some implementations, a mass content of hydrogen in the carbon material is 0.01%-5%, which may specifically be 0.01%, 0.02%, 0.05%, 0.08%, 0.1%, 0.2%, 0.3%, 0.5%, 1%, 1.5%, 2%, 2.5%, 3%, 3.5%, 4%, 4.5%, or 5%, etc., and is not limited herein.

In some implementations, a mass content of oxygen in the carbon material is 0.01%-10%, which may specifically be 0.01%, 0.05%, 0.08%, 0.1%, 0.5%, 1%, 1.5%, 2%, 2.5%, 3%, 3.5%, 4%, 4.5%, or 5%, etc., and is not limited herein.

In some implementations, a mass content of nitrogen in the carbon material is 0.01%-0.5%, which may specifically be 0.01%, 0.02%, 0.05%, 0.08%, 0.1%, 0.2%, 0.3%, 0.5%, 1%, 1.5%, 2%, 2.5%, 3%, 3.5%, 4%, 4.5%, or 5%, etc., and is not limited herein.

At S20, a reaction gas containing a silicon source gas is introduced, and vapor deposition is performed on the carbon material, so as to obtain an anode material.

In some implementations, a deposition temperature for vapor deposition is 400 °C-650 °C. Specifically, the deposition temperature may be 400 °C, 420 °C, 450 °C, 470 °C, 490 °C, 500 °C, 530 °C, 550 °C, 580 °C, 600 °C, 610 °C, 620 °C, 630 °C, 640 °C, or 640 °C, etc., or may definitely be other values between 400 °C and 650 °C, and is not limited herein.

In some implementations, a heating rate of vapor deposition is 2 °C/min-20 °C/min, which may specifically be 2 °C/min, 5 °C/min, 6 °C/min, 7 °C/min, 8 °C/min, 9 °C/min, 10 °C/min, 13 °C/min, 15 °C/min, 16 °C/min, 17 °C/min, 18 °C/min, 19 °C/min, or 20 °C/min, etc., and is not limited herein.

In some implementations, a deposition pressure for vapor deposition is 0.05 kPa-101 kPa. Specifically, the deposition pressure may be 0.05 kPa, 0.1 kPa, 0.5 kPa, 1 kPa, 5 kPa, 10 kPa, 15 kPa, 20 kPa, 25 kPa, 30 kPa, 35 kPa, 40 kPa, 45 kPa, 50 kPa, 80 kPa, or 101 kPa, etc., or may definitely be other values within the above range, and is not limited herein.

In some implementations, a deposition time for vapor deposition is 2 h-1000 h. Specifically, the deposition time may be 2 h, 5 h, 10 h, 50 h, 100 h, 150 h, 200 h, 250 h, 300 h, 350 h, 400 h, 500 h, 600 h, 650 h, 700 h, 800 h, 900 h, or 1000 h, etc., or may definitely be other values between 2 h and 1000 h, which is not limited herein. Preferably, the deposition time for vapor deposition is 2 h-50 h.

It may be understood that, the process conditions (e.g., the deposition temperature, the deposition pressure, and the deposition time) of vapor deposition all affect the deposition of a silicon-based material in the pores of the carbon material. By controlling the temperature, pressure, and time for vapor deposition within the above ranges, it may ensure that the reaction gas containing the active substances is not decomposed and deposited before entering the pores of the carbon material, and is rapidly decomposed and deposited after entering the pores.

In some implementations, vapor deposition is performed under a protective atmosphere.

In some implementations, the protective atmosphere includes at least one of nitrogen, argon, helium, neon, krypton, and xenon.

In some implementations, the reaction gas includes a raw material of the silicon source gas. The raw material of the silicon source gas includes at least one of monosilane, disilane, monochlorosilane, dichlorosilane, trichlorosilane, and tetrachlorosilane. It should be noted that, when the raw material of the silicon source gas is the monosilane, the disilane, the monochlorosilane, or the dichlorosilane, the raw material is in a gas state at normal temperature. When the raw material of the silicon source gas is the trichlorosilane or the tetrachlorosilane, the raw material is in a liquid state at normal temperature. During vapor deposition, a liquid silicon source is gasified into a gaseous silicon source.

In some implementations, the flow of the silicon source gas is 1 L/min-20 L/min, which may specifically be 1 L/min, 1.5 L/min, 2 L/min, 5 L/min, 6 L/min, 8 L/min, 10 L/min, 12 L/min, 15 L/min, 18 L/min, or 20 L/min, etc., and is not limited herein.

In some implementations, the method further includes: the reaction product of vapor deposition is cooled, washed, and dried.

In some implementations, the manner of washing includes ultrasonic washing.

In some implementations, a washing solvent includes anhydrous ethanol.

In some implementations, a washing time is 30 min-60 min, which may specifically be 30 min, 35 min, 40 min, 45 min, 50 min, 51 min, 53 min, 55 min, 56 min, 57 min, 58 min, 59 min, or 60 min, or may definitely be other values within the above range, and is not limited herein.

In some implementations, the time for drying is 20 min-100 min. Specifically, the time for drying may be 20 min, 25 min, 30 min, 35 min, 40 min, 45 min, 50 min, 55 min, 60 min, 65 min, 70 min, 75 min, 80 min, 85 min, 90 min, 95 min, or 100 min, etc., which is not limited herein.

In some implementations, a drying temperature is 70 °C-90 °C, which may specifically be 70 °C, 75 °C, 80 °C, 81 °C, 83 °C, 84 °C, 85 °C, 86 °C, 87 °C, 88 °C, 89 °C, or 90 °C, or may definitely be other values between 70 °C and 90 °C, and is not limited herein.

The present disclosure further provides a battery. The battery includes the above anode material.

The above were only preferred embodiments of the present disclosure, and were not used to limit the present disclosure. Any modifications, equivalent replacements and improvements and the like made within the spirit and principle of the present disclosure should be included within the scope of protection of the present disclosure.

### Performance test

(1) Etching of anode material:
   A nitric acid solution with a concentration of 1 M is added in the anode material for soaking for 4 h; then an HF acid solution with a 20% mass fraction is added dropwise to the anode material, yellow smoke is produced, and the acid solution is repeated added dropwise for a plurality of times, until there no yellow smoke produced in the solution; and finally, the nitric acid solution with the concentration of 1 M is used again to eliminate residue, and then washing and drying are performed to obtain the anode material with the silicon particles removed, that is, the carbon material.
(2) Method for testing specific surface area of anode material or anode material with silicon particles removed:
   A specific surface area is measured by using a TriStar3000 surface area and aperture analyzer from Micromeritics, USA.
(3) Method for testing pore volume of anode material or anode material with silicon particles removed:
   A test is performed by using an ASAP2460 device from Micromeritics, USA, and a pore volume V is calculated within an aperture range of 17 Å-3000 Å by using a BJH Desorption cumulative volume of pores model.
   Micropore and mesopore analysis is performed by using Micromeretics ASAP2460. At a liquid nitrogen temperature, an equilibrium amount of nitrogen adsorbed on a surface of an object is related to characteristics such as an aperture, and in combination with the rule of change of an adsorption amount with relative pressure in an adsorption process, various models may be fit to calculate the aperture. A report generated by software uses a Density Functional Theory (DFT) method to calculate aperture distribution, a total pore volume, and a pore volume within a certain range.
   A true density P of the anode material is tested, and the porosity =V/(V+1/P) of the anode material is calculated.
(4) Method for testing apertures of pores of anode material or anode material with silicon particles removed:
   A proper amount of sample particles is taken, the apertures of pores are measured under a Transmission Electron Microscope (TEM).
(5) Method for testing oil absorption value of anode material or anode material with silicon particles removed:
   An S-500 oil absorption value tester from ASAHI SOUKEN, Japan is used, a powder sample with certain mass is placed in a mixing chamber, and then oil (DBP) is added dropwise to the sample at a constant rate, and stirred at the same time by using a rotary wing at a constant rotary speed. As the amount of the oil absorbed by the sample increases, the mixed material changes from a free-flowing state to a semi-plastic agglomerate. In this process, the viscosity of the mixture gradually increases, and peak values appear. The oil absorption value (mL/100g) of the sample is calculated by dropwise adding the oil at 70% of the maximum torque obtained from a torque curve generated by the change in viscosity characteristics at an end point of measurement.
(6) Method for testing average particle size of silicon particles:
   Nano silicon particles are observed by a field emission scanning electron microscopy or a transmission electron microscope, the particle sizes of 5-10 nano silicon particles are directly measured by a scale, and an average value of the particle sizes is taken as the final particle size of the nano silicon particles.
(7) Method for particle size of anode material:
   Volume reference cumulative particle size distribution determined by particle size distribution is measured by using a laser particle analyzer; D10 indicates a corresponding particle size when percentage of cumulative particle size distribution of powder reaches 10%; D50 indicates a corresponding particle size when the percentage of cumulative particle size distribution reaches 50%; and D90 indicates a corresponding particle size when the percentage of cumulative particle size distribution reaches 90%.
(8) Method for testing mass content of carbon in anode material: A G4ICARUSHF infrared carbon sulfur analyzer from Bruker is used; a sample is burned at a high temperature in an oxygen-enriched state, and carbon and sulfur contained in the sample are respectively oxidized into carbon dioxide and sulfur dioxide; the generated gases enter an infrared detector with a carrier gas; and quantitative statistics is performed on changes in a carbon dioxide signal and sulfur dioxide signal, and contents of the carbon and sulfur may be calculated, respectively.
(9) Method for testing mass content of silicon in anode material:
   An SA2-9-17TP box atmosphere furnace from Nanyang Xinyu is used; burning is performed under an oxygen atmosphere; silicon in the sample reacts with silicon oxide to become silica; and carbon is burned and discharged as carbon dioxide, and the silicon content is calculated through weighing.
(10) Method for testing tap density of anode material or anode material with silicon particles removed:
   A Better tap density meter is used, 100 g of a sample is weighed, and vibration is performed for 3000 times at 300 times/min to test a tap density.
(11) Method for testing mass contents of nitrogen, oxygen, and hydrogen in anode material with silicon particles removed:
   An ONH2000 oxygen nitrogen hydrogen element analyzer from VERDER is used, the sample is coated by a fluxing agent and molten in an inert atmosphere, the oxygen contained in the sample is reduced into carbon dioxide by carbon in a graphite crucible, the generated carbon dioxide enters the infrared detector with the carrier gas, and the content of oxygen may be calculated by performing quantitative statistics on changes in the carbon dioxide signal. The sample is coated by the fluxing agent and molten in the inert atmosphere, the nitrogen and hydrogen contained in the sample are cracked to form respective stable nitrogen and hydrogen gases, the generated nitrogen and hydrogen gases enter a thermal conductivity detector with the carrier gas, and mass contents of the nitrogen and hydrogen may be respectively calculated by performing quantitative statistics on changes in heat of a thermal conductivity cell.
(13) Testing for compaction density of anode material:
   A CARVER4350.22 powder compaction density from MYCRO is used, a sample with specific mass m is placed in a die, a 1.0 T pressure is applied, the pressure is removed after being held for 30 S, a thickness is tested, and a compaction density is obtained through calculation.
(14) Testing for pH of anode material:
   A Mettler Toledo FE20pH meter is used, according to a potential difference measured in a solution by a working electrode battery consisting of a measuring electrode and a reference electrode, and by using a linear relationship between a pH value of a solution to be tested and a potential of a working battery, a pH value is converted through a current meter. 5 g of the sample and 45 mL of water are weighed and dispersed through stirring, then ultrasound is performed for 5 min, and a test is performed after 10 min of standing.
(15) Testing for gas production value
   CMC is dispersed in water according to a mass ratio of 1.4% for gluing, and after uniform dispersion, 10 g of glue liquid and 10 g of the anode material are mixed to obtain slurry; the slurry is put into an aluminum plastic film bag, and the mass of the slurry is recorded; then sealing is performed to form a sealed aluminum plastic film bag, the sealed aluminum plastic film bag is fixed at a bottom of a container and completely soaked in water, and a volume of the aluminum plastic film bag is recorded; after 24 h of fixation, the volume of the aluminum plastic film bag is recorded again; and gas production of a silicon anode material is calculated according to changes in a volume of an aluminum plastic film, in mL/g.
(16) Testing for electrochemical performance
   1) A method for testing first discharging specific capacity and Initial Coulombic Efficiency (ICE) includes: anode slurry is prepared according to a mass ratio of an anode material, conductive carbon black, and polyacrylic acid (PPA) being 75:15:10, coated on copper foil, and dried and prepared into an anode sheet. A metallic lithium sheet is used as a counter electrode, and a button battery is assembled in a glove box filled with argon. At a current density of 0.1 C, a charging and discharging test is performed on the button battery in a charging and discharging interval of 0.01 V-5 V, so as to obtain the first discharging specific capacity and ICE of the button battery.
   2) A method for testing capacity retention and electrode plate thickness expansion after 50 cycles includes: anode slurry is prepared according to a mass ratio of an anode material, conductive carbon black (Super-P), conductive graphite (KS-6), CMC, and Styrene Butadiene Rubber (SBR) being 92:2:2:2:2, coated on copper foil, and dried and prepared into an anode sheet. The proportion of the anode material having a carbon coating layer and the proportion of Si-C and graphite in a graphite mixture are determined by first reversible specific capacities of both and the capacities of the two to be prepared. A metallic lithium sheet is used as a counter electrode, and a button battery is assembled in a glove box filled with argon. At the current density of 1 C, the charging and discharging test is performed repeatedly for 50 times on the button battery in the charging and discharging interval of 0.01 V-5 V, so as to obtain the capacity retention and electrode plate thickness expansion of the battery after 50 cycles.
(17) Method for testing total dissolution of anode material:
   An OPTIMA8000/5000 inductively coupled plasma optical emission spectrometer from PE/Agilent and an SGM.M8/10A muffle furnace from Sigma are used. The muffle furnace is used for calcination to remove carbon (if any), then HF is used to digest and remove Si, then nitric acid is added to digest residues, and a test is performed by using an ICP optical spectrometer after making up.
(18) Method for testing ICP of anode material:
   Aqua regia is used to dissolve an anode material sample, filtration and constant volume, and an element content is tested by using the ICP optical spectrometer.
(19) Method for particle fractal dimension of anode material:
   A fractal dimension of particles is measured by using a Fractal Box Count plug-in, an image is opened, converted into 8-bit and binarized (Image→Adjust→Threshold), and the plug-in (Analyze→Tools→Fractal Box Count) is opened. Parameters are initialized; and after image binarization, a white portion (pixel value=255) is a signal required, a black portion is the background, and Black Background is checked. Linear regression of data is performed in a selected box, so as to obtain a linear regression result and a fractal dimension X₀.

### Embodiments 1-1

(1) A porous carbon material with a specific surface area of 1800 m²/g, a pore volume of 1.2 cm³/g, a maximum aperture of 9 nm, an average aperture of 1.81 nm, porosity of 50%, a pH of 8, and a tap density of 0.39 cm³/g was selected. A volume proportion of pores with apertures below 1.5 nm in a total pore volume was 22%, the volume proportion of the pores with apertures below 1.6 nm in the total pore volume was 35%, the volume proportion of the pores with apertures below 2 nm in the total pore volume was 82%, and the volume proportion of the pores with apertures below 5 nm in the total pore volume was 95%. B' of the carbon material was 1.5, and C2' of the carbon material was 18; and an average shape coefficient of the carbon material was 0.89. xl
(2) Porous carbon was placed in a CVD furnace, monosilane was used as a working gas, a deposition temperature was 500 °C, a deposition time was 10 h, the flow of the monosilane was 2 L/min, and an anode material was obtained.

The anode material prepared in this embodiment included a carbon material and a silicon-based material. The carbon material had pores, and at least part of the silicon-based material was filled in the pores. An average shape coefficient F₀ of the anode material was 0.9.

Remaining parameters of the anode material in this embodiment were shown in Table 2.

### Embodiment 1-2:

A difference between this embodiment and Embodiment 1-1 lied in that, a carbon material with pores was selected, and specific parameters of pore structures of the carbon material were shown in Table 1. Parameters of the anode material in this embodiment were shown in Table 2.

### Embodiments 1-3

A difference between this embodiment and Embodiment 1-1 lied in that, a carbon material with pores was selected, and specific parameters of pore structures of the carbon material were shown in Table 1. Parameters of the anode material in this embodiment were shown in Table 2.

### Embodiments 1-4

A difference between this embodiment and Embodiment 1-1 lied in that, a carbon material with pores was selected, and specific parameters of pore structures of the carbon material were shown in Table 1. Parameters of the anode material in this embodiment were shown in Table 2.

### Embodiments 1-5

A difference between this embodiment and Embodiment 1-1 lied in that, a carbon material with pores was selected, and specific parameters of pore structures of the carbon material were shown in Table 1. Parameters of the anode material in this embodiment were shown in Table 2.

### Embodiments 1-6

A difference between this embodiment and Embodiment 1-1 lied in that, a carbon material with pores was selected, and specific parameters of pore structures of the carbon material were shown in Table 1. Parameters of the anode material in this embodiment were shown in Table 2.

### Embodiments 1-7

A difference between this embodiment and Embodiment 1-1 lied in that, a carbon material with pores was selected, and specific parameters of pore structures of the carbon material were shown in Table 1. Parameters of the anode material in this embodiment were shown in Table 2.

### Embodiments 1-8

A difference between this embodiment and Embodiment 1-1 lied in that, a carbon material with pores was selected, and specific parameters of pore structures of the carbon material were shown in Table 1. Parameters of the anode material in this embodiment were shown in Table 2.

### Embodiments 1-9

A difference between this embodiment and Embodiment 1-1 lied in that, a carbon material with pores was selected, and specific parameters of pore structures of the carbon material were shown in Table 1. Parameters of the anode material in this embodiment were shown in Table 2.

### Embodiments 1-10

A difference between this embodiment and Embodiment 1-1 lied in that, a carbon material with pores was selected, and specific parameters of pore structures of the carbon material were shown in Table 1. Parameters of the anode material in this embodiment were shown in Table 2.

### Embodiments 1-11

A difference between this embodiment and Embodiment 1 lied in that, a carbon material with pores was selected, and specific parameters of pore structures of the carbon material were shown in Table 1.

Parameters of the anode material in this embodiment were shown in Table 2.

### Embodiments 1-12

A difference between this embodiment and Embodiment 1 lied in that, a carbon material with pores was selected, and specific parameters of pore structures of the carbon material were shown in Table 1.

Parameters of the anode material in this embodiment were shown in Table 2.

### Embodiments 1-13

A difference between this embodiment and Embodiment 1 lied in that, a carbon material with pores was selected, and specific parameters of pore structures of the carbon material were shown in Table 1.

Parameters of the anode material in this embodiment were shown in Table 2.

### Embodiments 1-14

A difference between this embodiment and Embodiment 1 lied in that, a carbon material with pores was selected, and specific parameters of pore structures of the carbon material were shown in Table 1.

Parameters of the anode material in this embodiment were shown in Table 2.

### Embodiments 1-15

A difference between this embodiment and Embodiment 1 lied in that, a carbon material with pores was selected, and specific parameters of pore structures of the carbon material were shown in Table 1.

Porous carbon was placed in a CVD furnace, monosilane was used as a working gas, a deposition temperature was 550 °C, a deposition time was 9 h, the flow of the monosilane was 1 L/min, and an anode material was obtained.

Parameters of the anode material in this embodiment were shown in Table 2.

### Embodiments 1-16

A difference between this embodiment and Embodiment 1 lied in that, a carbon material with pores was selected, and specific parameters of pore structures of the carbon material were shown in Table 1.

Parameters of the anode material in this embodiment were shown in Table 2.

### Embodiments 1-17

A difference between this embodiment and Embodiment 1 lied in that, a carbon material with pores was selected, and specific parameters of pore structures of the carbon material were shown in Table 1.

Parameters of the anode material in this embodiment were shown in Table 2.

### Comparative embodiment 1-1

A difference between this embodiment and Embodiment 1 lied in that,

A carbon material with pores was selected, and specific parameters of pore structures of the carbon material were shown in Table 1.

Parameters of the anode material in this embodiment were shown in Table 2.

**Table 1. Parameters of carbon material**

| Performance parameter | Specific surface area S2' m²/g | Pore volume P2' cm³/g | Average aperture nm | Porosity% | Tap density g/cm³ | Volume proportion of pores with apertures below 5 nm in total pore volume/% | B' | C2' | pH |
|---|---|---|---|---|---|---|---|---|---|
| Embodiments 1-1 | 1800 | 1.2 | 1.81 | 60 | 0.39 | 95 | 1.5 | 15 | 8 |
| Embodiments 1-2 | 1700 | 0.8 | 2.01 | 64 | 0.36 | 93 | 1.8 | 21.25 | 9 |
| Embodiments 1-3 | 1500 | 1.0 | 2.13 | 66 | 0.33 | 94 | 1.2 | 15 | 6 |
| Embodiments 1-4 | 2100 | 1.5 | 2.16 | 68 | 0.38 | 97 | 1.7 | 14 | 9 |
| Embodiments 1-5 | 1950 | 1.4 | 1.73 | 60 | 0.37 | 96 | 1 | 13.93 | 8 |
| Embodiments 1-6 | 1650 | 1.0 | 1.89 | 60 | 0.40 | 94 | 1.9 | 16.5 | 8 |
| Embodiments 1-7 | 1720 | 1.1 | 1.85 | 60 | 0.39 | 94 | 1.8 | 15.64 | 8 |
| Embodiments 1-8 | 1880 | 1.3 | 1.75 | 60 | 0.38 | 96 | 1.3 | 14.46 | 8 |
| Embodiments 1-9 | 1750 | 1.2 | 1.99 | 65 | 0.35 | 95 | 1.6 | 14.58 | 8 |
| Embodiments 1-10 | 2160 | 1.2 | 1.81 | 60 | 0.39 | 92 | 1.5 | 18 | 8 |
| Embodiments 1-11 | 1300 | 0.6 | 1.92 | 61 | 0.39 | 91 | 1.1 | 21.7 | 7 |
| Embodiments 1-12 | 2500 | 2 | 2.19 | 67 | 0.35 | 93 | 1.0 | 12.5 | 8 |
| Embodiments 1-13 | 1900 | 1.3 | 1.74 | 62 | 0.39 | 96 | 1.3 | 14.6 | 6 |
| Embodiments 1-14 | 1700 | 0.9 | 1.95 | 69 | 0.38 | 95 | 1.4 | 18.9 | 9 |
| Embodiments 1-15 | 1800 | 0.8 | 1.72 | 64 | 0.34 | 97 | 1.5 | 22.5 | 8 |
| Embodiments 1-16 | 1550 | 1.6 | 2.17 | 65 | 0.41 | 93 | 1.5 | 9.69 | 8 |
| Embodiments 1-17 | 1800 | 0.7 | 1.72 | 64 | 0.34 | 94 | 1.5 | 25.7 | 8 |
| Comparative embodiment 1-1 | 2160 | 1.2 | 1.81 | 60 | 0.39 | 92 | 1.5 | 18 | 8 |

**Table 2. Parameters of anode material with silicon particles removed**

| Performance parameter | Specific surface area S2 m²/g | Pore volume P2 cm³/g | Average aperture nm | Porosity% | Volume proportion of pores with apertures below 5 nm in total pore volume/% | Q₂ 100 mL/g | B | C2 |
|---|---|---|---|---|---|---|---|---|
| Embodiments 1-1 | 1798 | 1.2 | 1.82 | 59 | 94 | 160 | 1.5 | 18 |
| Embodiments 1-2 | 1697 | 0.8 | 2.03 | 63 | 92 | 147 | 1.8 | 23 |
| Embodiments 1-3 | 1496 | 1.0 | 2.14 | 65 | 93 | 140 | 1.2 | 20 |
| Embodiments 1-4 | 2095 | 1.5 | 2.17 | 67 | 96 | 173 | 1.7 | 18 |
| Embodiments 1-5 | 1943 | 1.4 | 1.74 | 58 | 95 | 167 | 1 | 19 |
| Embodiments 1-6 | 1642 | 1.0 | 1.90 | 57 | 93 | 144 | 1.9 | 17 |
| Embodiments 1-7 | 1709 | 1.1 | 1.86 | 59 | 93 | 150 | 1.8 | 10 |
| Embodiments 1-8 | 1871 | 1.3 | 1.76 | 58 | 95 | 164 | 1.3 | 25 |
| Embodiments 1-9 | 1749 | 1.2 | 2.01 | 64 | 94 | 154 | 1.6 | 21 |
| Embodiments 1-10 | 2158 | 1.2 | 1.82 | 59 | 91 | 184 | 1.5 | 18 |
| Embodiments 1-11 | 1296 | 0.6 | 1.93 | 60 | 90 | 136 | 1.1 | 21.7 |
| Embodiments 1-12 | 2495 | 2 | 2.31 | 64 | 90 | 187 | 1.0 | 12.5 |
| Embodiments 1-13 | 1894 | 1.3 | 1.75 | 61 | 95 | 165 | 1.3 | 14.6 |
| Embodiments 1-14 | 1693 | 0.9 | 1.96 | 68 | 94 | 147 | 1.4 | 18.9 |
| Embodiments 1-15 | 1792 | 0.8 | 1.73 | 63 | 96 | 160 | 1.5 | 22.5 |
| Embodiments 1-16 | 1541 | 1.6 | 2.18 | 64 | 92 | 142 | 1.5 | 9.63 |
| Embodiments 1-17 | 1790 | 0.7 | 1.73 | 63 | 93 | 160 | 1.5 | 25.6 |
| Comparative embodiment 1 | 2159 | 1.2 | 1.82 | 59 | 91 | 184 | 1.5 | 18 |

**Table 3: Parameters of anode material**

| Performance parameter | F₀ | A | C1 | Specific surface area S1 m²/g | Total pore volume P1 cm³/g | Average aperture nm | Tap density g/cm³ | (D₉₀-D₁₀)/ D₅₀ | Mass content of silicon | Mass content of carbon |
|---|---|---|---|---|---|---|---|---|---|---|
| Embodiments 1-1 | 0.9 | 2.0 | 14 | 2.8 | 0.002 | 2.62 | 2.1 | 1.47 | 56 | 43 |
| Embodiments 1-2 | 0.82 | 2.2 | 9 | 2.7 | 0.003 | 2.84 | 2.2 | 1.26 | 57 | 41 |
| Embodiments 1-3 | 0.93 | 1.7 | 15 | 1.5 | 0.001 | 3.68 | 2.3 | 1.31 | 58 | 40 |
| Embodiments 1-4 | 0.84 | 2.3 | 19 | 1.9 | 0.001 | 4.98 | 2.0 | 1.41 | 55 | 42 |
| Embodiments 1-5 | 0.9 | 2.4 | 20 | 2.0 | 0.001 | 2.51 | 2.2 | 1.47 | 54 | 45 |
| Embodiments 1-6 | 0.9 | 1.8 | 10 | 2.0 | 0.002 | 3.06 | 2.1 | 1.47 | 53 | 44 |
| Embodiments 1-7 | 0.9 | 1.6 | 8 | 2.4 | 0.003 | 3.45 | 2.1 | 1.47 | 54 | 44 |
| Embodiments 1-8 | 0.9 | 2.2 | 16 | 1.6 | 0.001 | 2.59 | 2.1 | 1.47 | 56 | 42 |
| Embodiments 1-9 | 0.9 | 2.1 | 15 | 1.5 | 0.001 | 2.61 | 2.1 | 1.47 | 59 | 40 |
| Embodiments 1-10 | 0.9 | 2.0 | 14 | 10 | 0.0071 | 2.62 | 0.9 | 1.47 | 44 | 53 |
| Embodiments 1-11 | 0.80 | 1.3 | 14 | 7 | 0.005 | 2.13 | 0.8 | 2.01 | 50 | 47 |
| Embodiments 1-12 | 0.78 | 2.5 | 12 | 3.6 | 0.003 | 45.76 | 0.9 | 3.45 | 51 | 48 |
| Embodiments 1-13 | 0.75 | 1.4 | 16 | 3.2 | 0.002 | 38.91 | 1.1 | 0.98 | 45 | 53 |
| Embodiments 1-14 | 0.72 | 1.5 | 10 | 1.1 | 0.0011 | 14.32 | 1.0 | 4.75 | 49 | 48 |
| Embodiments 1-15 | 0.9 | 2.4 | 12.5 | 5 | 0.004 | 7.65 | 1.2 | 1.63 | 41 | 57 |
| Embodiments 1-16 | 0.9 | 1.4 | 7 | 7 | 0.01 | 2.68 | 0.8 | 1.49 | 52 | 47 |
| Embodiments 1-17 | 0.9 | 2.4 | 20.8 | 5 | 0.0024 | 2.60 | 0.8 | 1.41 | 42 | 55 |
| Comparative embodiment 1 | 0.64 | 1.3 | 14 | 7 | 0.005 | 6.12 | 0.8 | 1.48 | 48 | 51 |

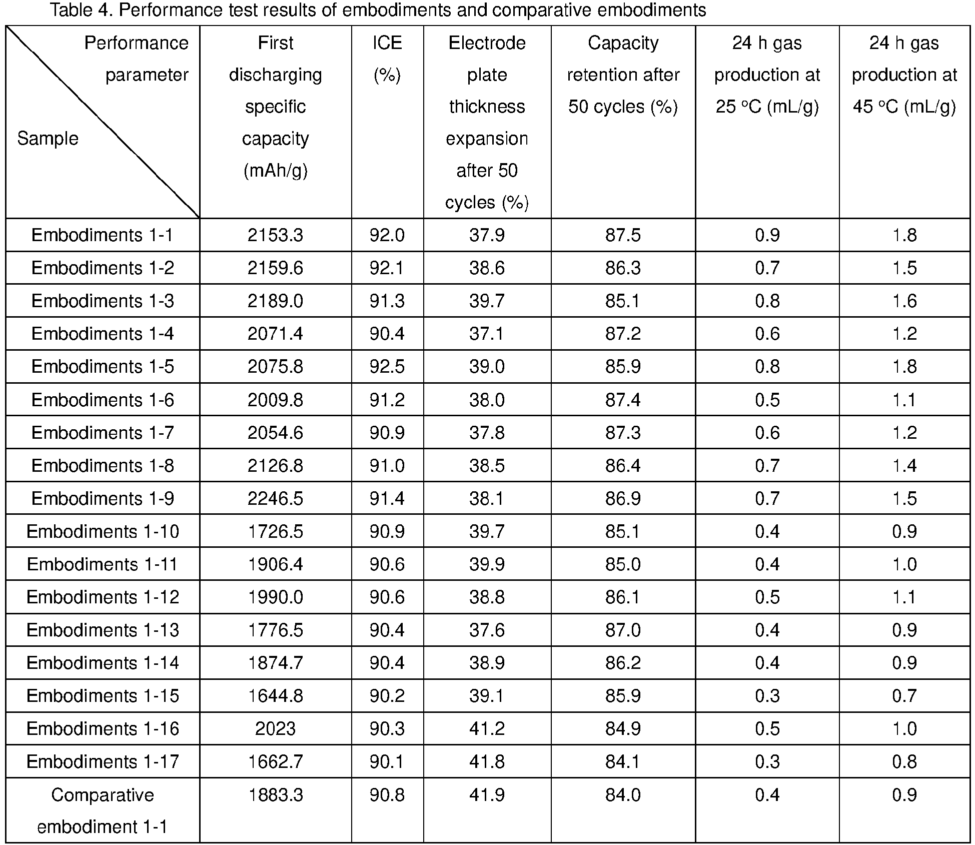

According to results shown in Tables 1-3, it might be learned that the first discharging specific capacity, the ICE, and the capacity retention after 50 cycles of the anode materials prepared in Embodiments 1-1 to 1-15 of the present disclosure were all higher, and the electrode plate thickness expansion after 50 cycles of the material was lower. This is because the particle shape of the anode material prepared in this embodiment was close to spherical particles, and a suitable number of pore structures with suitable apertures were distributed in the spherical particles. The spherical particles might improve the isotropic properties of the anode material. In the charging and discharging process, the anode material could contract and expand relatively uniformly in a radial direction, such that the problem of stress concentration due to volume expansion of the silicon-based material might be reduced. Meanwhile, the average shape coefficient of the anode material particles was maintained with in the above range, it indicated that the morphological similarity of each anode material particle was higher. After the anode material was coated to form an anode sheet, stress in each anode material particle in an anode active material layer on a surface of the electrode plate in each direction was more uniform, facilitating uniform releasing of expansion stress in each direction, and maintaining the stability of the particle structure, so as to reduce pulverization of the particles, and thereby improving the cycling performance of the material.

According to test data in Embodiment 1-1 and Embodiments 1-14 to 1-15, as well as Embodiments 1-16 to 1-17, it might be learned that, when the average shape coefficient F0 of the anode material was controlled within the range of 0.65-1, and the anode material simultaneously met 8≤C1≤20, it indicated that the anode material had the suitable number of pores with suitable apertures, such that the anode material had an enough space to relieve the expansion of the active substances in the anode material, thereby reducing the occurrence of a side reaction between the negative electrode material and the electrolytic solution due to an excessive specific surface area of the negative electrode material, and comprehensively improving the performance of various aspects of the anode material. Therefore, the data of Embodiment 1-16 and Embodiment 1-17 was better embodied.

The average shape coefficient F0 of the anode material of Comparative embodiment 1-1 was too small, obvious edges and corners of shapes of the particles are increased. In a rolling process of the electrode plate, the anode material particles were prone to partial fracture, leading to an increase in the side reactions between the anode material and the electrolyte and an increase in active lithium ions consumed, thus causing the first efficiency of the anode material to reduce. During charging and discharging, due to the local stress concentration of the anode material particles, the particles were further crushed and pulverized, causing the cycling performance of the material to reduce.

In an ideal state, if the average shape coefficient of the anode material was closer to 1, the particles were closer to spherical, the anode material could contract and expand more relatively uniformly in the radial direction, and fewer particles of the anode material were broken. In the foregoing Embodiments 1-1 to 1-17, through previous screening of the carbon materials, the applicant selected the appropriate carbon material to combine with the silicon particles, such that the average shape coefficient of the anode material might be increased, but this might cause the increasing of production costs. Furthermore, the previous screening of the carbon materials was time-consuming and labor-intensive.

Generally, in order to increase the average shape coefficient of the anode material, spheroidization was performed on the anode material to increase the average shape coefficient of the anode material. Large amount of heat produced during spheroidization, resulting in partial oxidation of the silicon particles in the anode material, and the specific capacity of the anode material reduced. Furthermore, partial anode material was also pulverized during spheroidization, and the side reactions of the anode material were increased, thus affecting the cycling performance of the anode material.

Therefore, according to further research and development of the anode material, the applicant has found that, when the average shape coefficient F₀ of the anode material was controlled within the range of 0.65-0.79, the anode material could also meet desired use requirements, and the production costs could be greatly reduced.

### Embodiments 2-1

(1) A coconut husk was placed in a crusher for crushing, ground in an automatic mortar, and then sieved to below 45 µm for later use. The crushed coconut husk was placed in a vacuum freeze dryer for freeze-drying for 24 h, placed in a tube furnace, treated for 120 min at 750 °C under an argon atmosphere, then soaked with dilute hydrochloric acid (10wt%) for 6 h to remove inorganic impurities in a material, then washed with deionized water and anhydrous ethanol until filtrate is neutral, and placed in a 60 °C blast oven overnight, so as to obtain an intermediate.
(2) The intermediate was placed in a quartz boat, and placed in the middle of a quartz tube of the tube furnace. Before heating was performed, high-purity argon was introduced for 30 min to remove the air in the tube, then the temperature was heated to 1000 °C at a heating rate of 10 °C/min, primary carbonization treatment was performed at a constant temperature for 1 h, and then the temperature was cooled to room temperature to obtain the carbonized material.
(3) The carbonized material and a KOH solution were mixed according to a mass ratio of 1:2 (a KOH concentration in the solution was 0.2 g/ml), evaporation was performed for 24 h at 60 °C to obtain a dried mixed sample, the mixed sample was placed in the tube furnace, and the temperature was heated to 800 °C at a heating rate of 5 °C/min, held for 2 h, and naturally cooled to room temperature. A black powder sample was placed in the dilute hydrochloric acid (mass fraction was 10wt%), and soaked for 24 h; and washing and drying were performed, and then ball-milling fluidized bed airflow pulverization was performed to obtain a carbon material.
(4) The carbon material was placed in a CVD furnace, monosilane was used as a working gas, a deposition temperature was 500 °C, a deposition time was 10 h, the flow of the monosilane was 2 L/min, and an anode material was obtained.

The anode material prepared in this embodiment included the carbon material and silicon particles. The carbon material had pores, and at least part of the silicon particles was filled in the pores. An average shape coefficient F₀ of the anode material was 0.7.

Remaining parameters of the anode material in this embodiment were shown in Table 2.

### Embodiment 2-2:

(1) A coconut husk was placed in a crusher for crushing, ground in an automatic mortar, and then sieved to below 45 µm for later use. The crushed coconut husk was placed in a vacuum freeze dryer for freeze-drying for 24 h, placed in a tube furnace, treated for 120 min at 750 °C under an argon atmosphere, then soaked with dilute hydrochloric acid (10wt%) for 6 h to remove inorganic impurities in a material, then washed with deionized water and anhydrous ethanol until filtrate is neutral, and placed in a 60 °C blast oven overnight, so as to obtain an intermediate.
(2) The intermediate was placed in a quartz boat, and placed in the middle of a quartz tube of the tube furnace. Before heating was performed, high-purity argon was introduced for 30 min to remove the air in the tube, then the temperature was heated to 700 °C at a heating rate of 10 °C/min and held for 1 h, and then the temperature was cooled to room temperature to obtain the carbonized material.
(3) The carbonized material and a KOH solution were mixed according to a mass ratio of 1:4 (a KOH concentration in the solution was 0.2 g/ml), evaporation was performed for 24 h at 60 °C to obtain a dried mixed sample, the mixed sample was placed in the tube furnace, and the temperature was heated to 800 °C at a heating rate of 5 °C/min, held for 2 h, and naturally cooled to room temperature. A black powder sample was placed in the dilute hydrochloric acid (mass fraction was 10wt%), and soaked for 24 h; and washing and drying were performed, and then ball-milling fluidized bed airflow pulverization was performed to obtain a carbon material.
(4) The carbon material was placed in a CVD furnace, disilane was used as a working gas, a deposition temperature was 450 °C, a deposition time was 16 h, the flow of the disilane was 3 L/min, and an anode material was obtained.

The anode material prepared in this embodiment included the carbon material and silicon particles. The carbon material had pores, and at least part of the silicon particles was filled in the pores. An average shape coefficient F₀ of the anode material was 0.73.

Remaining parameters of the anode material in this embodiment were shown in Table 2.

### Embodiments 2-3

(1) A coconut husk was placed in a crusher for crushing, ground in an automatic mortar, and then sieved to below 45 µm for later use. The crushed coconut husk was placed in a vacuum freeze dryer for freeze-drying for 24 h, placed in a tube furnace, treated for 120 min at 750 °C under an argon atmosphere, then soaked with dilute hydrochloric acid (10wt%) for 6 h to remove inorganic impurities in a material, then washed with deionized water and anhydrous ethanol until filtrate is neutral, and placed in a 60 °C blast oven overnight, so as to obtain an intermediate.
(2) The intermediate was placed in a quartz boat, and placed in the middle of a quartz tube of the tube furnace. Before heating was performed, high-purity argon was introduced for 30 min to remove the air in the tube, then the temperature was heated to 1300 °C at a heating rate of 10 °C/min and held for 1 h, and then the temperature was cooled to room temperature to obtain the carbonized material.
(3) The carbonized material and a KOH solution were mixed according to a mass ratio of 1:6 (a KOH concentration in the solution was 0.2 g/ml), evaporation was performed for 24 h at 60 °C to obtain a dried mixed sample, the mixed sample was placed in the tube furnace, and the temperature was heated to 800 °C at a heating rate of 5 °C/min, held for 2 h, and naturally cooled to room temperature. A black powder sample was placed in the dilute hydrochloric acid (mass fraction was 10wt%), and soaked for 24 h; and washing and drying were performed, and then ball-milling fluidized bed airflow pulverization was performed to obtain a carbon material.
(4) The carbon material was placed in a CVD furnace, monosilane was used as a working gas, a deposition temperature was 550 °C, a deposition time was 6 h, the flow of the monosilane was 1 L/min, and an anode material was obtained.

The anode material prepared in this embodiment included the carbon material and silicon particles. The carbon material had pores, and at least part of the silicon particles was filled in the pores. An average shape coefficient F₀ of the anode material was 0.66.

### Embodiments 2-4

(1) A coconut husk was placed in a crusher for crushing, ground in an automatic mortar, and then sieved to below 45 µm for later use. The crushed coconut husk was placed in a vacuum freeze dryer for freeze-drying for 24 h, placed in a tube furnace, treated for 120 min at 750 °C under an argon atmosphere, then soaked with dilute hydrochloric acid (10wt%) for 6 h to remove inorganic impurities in a material, then washed with deionized water and anhydrous ethanol until filtrate is neutral, and placed in a 60 °C blast oven overnight, so as to obtain an intermediate.
(2) The intermediate was placed in a quartz boat, and placed in the middle of a quartz tube of the tube furnace. Before heating was performed, high-purity argon was introduced for 30 min to remove the air in the tube, then the temperature was heated to 900 °C at a heating rate of 10 °C/min and held for 1 h, and then the temperature was cooled to room temperature to obtain the carbonized material.
(3) The carbonized material and a KOH solution were mixed according to a mass ratio of 1:2 (a KOH concentration in the solution was 0.2 g/ml), evaporation was performed for 24 h at 60 °C to obtain a dried mixed sample, the mixed sample was placed in the tube furnace, and the temperature was heated to 800 °C at a heating rate of 5 °C/min, held for 2 h, and naturally cooled to room temperature. A black powder sample was placed in the dilute hydrochloric acid (mass fraction was 10wt%), and soaked for 24 h; and washing and drying were performed, and then ball-milling fluidized bed airflow pulverization was performed to obtain a carbon material.
(4) The carbon material was placed in a CVD furnace, monosilane was used as a working gas, a deposition temperature was 400 °C, a deposition time was 18 h, the flow of the monosilane was 3 L/min, and an anode material was obtained.

The anode material prepared in this embodiment included the carbon material and silicon particles. The carbon material had pores, and at least part of the silicon particles was filled in the pores. An average shape coefficient F₀ of the anode material was 0.79.

### Embodiments 2-5

A difference between this embodiment and Embodiment 2-1 lied in that,
a different carbon source precursor was used, and bamboo was used as the carbon source precursor.

### Embodiments 2-6

A difference between this embodiment and Embodiment 2-1 lied in that,
step (1) was not performed.

### Embodiments 2-7

A difference between this embodiment and Embodiment 2-1 lied in that,
(3) the carbonized material and a KOH solution were mixed according to a mass ratio of 1:10 (a KOH concentration in the solution was 0.2 g/ml), and evaporation was performed for 24 h at 60 °C to obtain a dried mixed sample.

### Embodiments 2-8

A difference between this embodiment and Embodiment 2-1 lied in that,
(3) the carbonized material and a KOH solution were mixed according to a mass ratio of 1:0.2 (a KOH concentration in the solution was 0.2 g/ml), and evaporation was performed for 24 h at 60 °C to obtain a dried mixed sample.

### Embodiments 2-9

A difference between this embodiment and Embodiment 2-3 lied in that,
(3) The carbonized material and a KOH solution were mixed according to a mass ratio of 1:1.5 (a KOH concentration in the solution was 0.2 g/ml), evaporation was performed for 24 h at 60 °C to obtain a dried mixed sample, the mixed sample was placed in the tube furnace, and the temperature was heated to 800 °C at a heating rate of 5 °C/min, held for 2 h, and naturally cooled to room temperature. A black powder sample was placed in the dilute hydrochloric acid (mass fraction was 10wt%), and soaked for 24 h; and washing and drying were performed, and then ball-milling fluidized bed airflow pulverization was performed to obtain a carbon material.

### Comparative embodiment 2-1

A difference between this embodiment and Embodiment 2-1 lied in that,
(3) the carbonized material and a KOH solution were mixed according to a mass ratio of 1:4 (a KOH concentration in the solution was 0.2 g/ml), evaporation was performed for 24 h at 60 °C to obtain a dried mixed sample, the mixed sample was placed in the tube furnace, and the temperature was heated to 800 °C at a heating rate of 5 °C/min, held for 2 h, and naturally cooled to room temperature. A black powder sample was placed in the dilute hydrochloric acid (mass fraction was 10wt%), and soaked for 24 h; and washing and drying were performed, and then ball-milling collision spike airflow pulverization was performed to obtain a carbon material.

### Comparative embodiment 2-2

A difference between this embodiment and Embodiment 2-1 lied in that,
(4) the carbon material was placed in a CVD furnace, monosilane was used as a working gas, a deposition temperature was 500 °C, a deposition time was 10 h, the flow of the monosilane was 2 L/min, and ball-milling fluidized bed airflow pulverization was performed on the deposit product, so as to obtain an anode material.

The anode material prepared in this embodiment included the carbon material and silicon particles. The carbon material had pores, and at least part of the silicon particles was filled in the pores. An average shape coefficient F₀ of the anode material was 0.86.

**Table 5. Parameters of anode material with silicon particles removed**

| Sample | H content (%) | O content (%) | N content (%) | Volume proportion of micropores (%) | Volume proportion of 2-5 nm pores (%) | Q₂ 100 mL/ g | B | C2 | Total pore volu me P2 cm³/ g | Specific surface area S2 m²/g |
|---|---|---|---|---|---|---|---|---|---|---|
| Embodiments 2-1 | 0.2 | 0.5 | 0.1 | 87 | 5 | 160 | 1.5 | 18 | 1.2 | 2160 |
| Embodiments 2-2 | 0.1 | 0.2 | 0.5 | 85 | 7 | 173 | 1.8 | 23 | 0.8 | 1840 |
| Embodiments 2-3 | 0.25 | 0.33 | 0.13 | 90 | 3 | 146 | 1.3 | 20 | 1.0 | 2000 |
| Embodiments 2-4 | 0.17 | 0.67 | 0.39 | 92 | 7 | 140 | 2.16 | 18 | 1.3 | 2340 |
| Embodiments 2-5 | 0.1 | 1.0 | 0.05 | 88 | 6 | 167 | 1.4 | 19 | 1.3 | 2470 |
| Embodiments 2-6 | 0.2 | 0.5 | 1 | 86 | 5 | 164 | 1.5 | 17 | 1.0 | 1700 |
| Embodiments 2-7 | 0.2 | 0.5 | 0.2 | 93 | 2 | 198 | 1.5 | 14 | 1.0 | 1400 |
| Embodiments 2-8 | 0.1 | 0.5 | 0.1 | 79 | 8 | 117 | 1.6 | 25 | 0.9 | 2250 |
| Embodiments 2-9 | 0.25 | 0.33 | 0.13 | 90 | 3 | 146 | 1.3 | 19.9 | 0.7 | 1390 |
| Comparative embodiment 2-1 | 0.2 | 0.5 | 0.1 | 87 | 5 | 158 | 1.5 | 21 | 1.1 | 2310 |
| Comparative embodiment 2-2 | 0.2 | 0.5 | 0.1 | 87 | 5 | 163 | 1.5 | 18 | 1.2 | 2160 |

**Table 6: Parameters of anode material**

| Sample | F₀ | A | C1 | Speci fic surfa ce area S1 m²/g | Total pore volume P1 cm³/g | Comp action densit y g/cm³ | Tap densit y g/cm³ | D₅₀ (nm ) | (D₉₀-D ₁₀)/D₅₀ | C/Si | C cont ent wt% | Si conte nt wt% |
|---|---|---|---|---|---|---|---|---|---|---|---|---|
| Embodiments 2-1 | 0.7 | 2.0 | 14 | 2.8 | 0.002 | 0.9 | 1.0 | 7.2 | 1.47 | 1.28 | 55 | 43 |
| Embodiments 2-2 | 0.73 | 2.2 | 9 | 1.35 | 0.0015 | 1.2 | 0.8 | 6.6 | 1.26 | 0.96 | 48 | 50 |
| Embodiments | 0.66 | 1.7 | 8.3 | 1 | 0.0012 | 1.3 | 1.2 | 7.3 | 1.31 | 1.2 | 54 | 45 |
| 2-3 | | | | | | | | | | | | |
| Embodiments 2-4 | 0.79 | 2.3 | 19 | 6.84 | 0.0036 | 1.0 | 0.75 | 8.1 | 1.41 | 0.9 | 47 | 52 |
| Embodiments 2-5 | 0.71 | 1.9 | 20 | 4.2 | 0.0021 | 0.9 | 1.0 | 7.4 | 1.44 | 1.26 | 54 | 43 |
| Embodiments 2-6 | 0.7 | 2.0 | 10 | 2.4 | 0.0024 | 0.9 | 1.0 | 7.3 | 1.47 | 1.33 | 53 | 40 |
| Embodiments 2-7 | 0.7 | 2.0 | 8 | 7.44 | 0.0093 | 0.85 | 0.92 | 7.2 | 1.47 | 0.61 | 35 | 57 |
| Embodiments 2-8 | 0.7 | 2.0 | 16 | 4.32 | 0.0027 | 0.9 | 1.0 | 7.2 | 1.47 | 1.91 | 65 | 34 |
| Embodiments 2-9 | 0.66 | 1.6 | 9.27 | 1.02 | 0.0011 | 1.3 | 1.2 | 7.3 | 1.31 | 1.48 | 59 | 40 |
| Comparative embodiment 2-1 | 0.55 | 2.0 | 15 | 3.9 | 0.0026 | 0.8 | 0.9 | 7.2 | 1.47 | 1.33 | 56 | 42 |
| Comparative embodiment 2-2 | 0.86 | 2.0 | 7.7 | 1.7 | 0.0022 | 0.9 | 1.0 | 7.2 | 1.47 | 1.25 | 50 | 40 |

**Table 7: Parameters of anode material**

| Sample | Q₁ 100 mL/g | (Q₂-Q ₁)/Q₁ | Avera ge apertu re nm | Microp ore proport ion (%) | Mesop ore proporti on (%) | Macropo re proporti on (%) | Powder conductivity at 20 kN (S/cm) | 24 h gas production at 25 °C (ml/g) | 24 h gas production at 45 °C (ml/g) |
|---|---|---|---|---|---|---|---|---|---|
| Embodiments 2-1 | 60 | 1.67 | 2.62 | 1 | 87 | 12 | 1 | 0.8 | 1.8 |
| Embodiments 2-2 | 55 | 2.14 | 2.84 | 3 | 92 | 5 | 1.25 | 0.6 | 1.9 |
| Embodiments 2-3 | 46 | 2.17 | 3.68 | 2 | 90 | 8 | 1.5 | 0.9 | 1.7 |
| Embodiments 2-4 | 68 | 1.06 | 4.98 | 4 | 92 | 4 | 0.9 | 0.7 | 1.6 |
| Embodiments 2-5 | 62 | 1.69 | 2.51 | 2 | 89 | 9 | 1.13 | 0.9 | 1.9 |
| Embodiments 2-6 | 57 | 1.89 | 3.06 | 1 | 88 | 11 | 0.8 | 1.1 | 2.1 |
| Embodiments 2-7 | 78 | 1.54 | 3.45 | 1 | 89 | 10 | 0.7 | 1.2 | 2.3 |
| Embodiments 2-8 | 28 | 3.18 | 2.59 | 2 | 86 | 12 | 1.32 | 0.5 | 1.6 |
| Embodiments 2-9 | 30 | 3.01 | 3.97 | 2 | 84 | 14 | 1.59 | 0.8 | 1.6 |
| Comparative embodiment 2-1 | 62 | 1.58 | 2.61 | 1 | 86 | 13 | 0.9 | 0.9 | 1.8 |
| Comparative embodiment 2-2 | 58 | 1.81 | 2.62 | 2 | 88 | 10 | 0.1 | 0.7 | 1.7 |

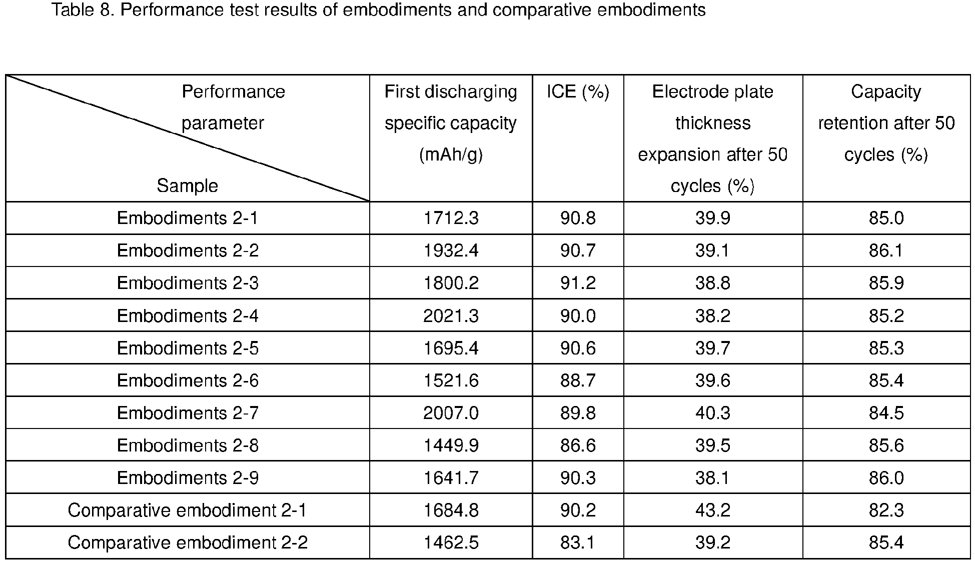

According to results shown in Tables 4-6, it might be learned that the first discharging specific capacity, the ICE, and the capacity retention after 50 cycles of the anode materials prepared in the embodiments of the present disclosure were all higher, and the electrode plate thickness expansion after 50 cycles of the material was lower. This was because the average shape coefficient of the anode material prepared in this embodiment was controlled within the range of 0.65-0.79, such that the obvious edges and corners of the particles could be effectively reduced. During charging and discharging, the anode material could contract and expand relatively uniformly in the radial direction, such that the problem of stress concentration near the edges and corners due to the volume expansion of the silicon particles in the anode material might be reduced, facilitating the maintaining of the stability of particle structures of the anode material, thereby reducing the pulverization of the particles. Furthermore, the average shape coefficient of the anode material was maintained within the above range, such that gaps among the anode material particles might be reduced, facilitating the increasing of the compaction density of the anode material and full soaking of the electrolyte, thereby improving the cycling performance of the anode material.

According to test data of Embodiment 2-1 and test data of Embodiment 2-6, it might be learned that, step (1) was not performed, the anode material prepared in Embodiment 2-6 had high impurity content, and high impurity content caused a reduction in the conductivity of the material. Meanwhile, partial aperture gaps in the carbon material were occupied by impurity elements, causing the Si content deposited in the carbon material to be relatively low, such that the first charging and discharging specific capacity and ICE of the anode material prepared in Embodiment 2-6 were relatively low.

According to test data of Embodiments 2-1 to 2-7 and test data of Embodiment 2-8, it might be learned that, the oil absorption value of the carbon material of Embodiment 2-8 was too small, causing the oil absorption value of the anode material filled with the silicon particles to be also relatively low; and while reducing the specific capacity of the anode material, the soaking performance of the anode material was reduced, resulting in a reduction in the ICE of the anode material compared to Embodiment 2-1.

In Comparative embodiment 2-1, ball-milling collision spike airflow pulverization was used, there were obvious edges and corners in the carbon material, the average shape coefficient of the anode material prepared was too small, that is, there were obvious edges and corners in the particles, during charging and discharging, the local expansion stress of the anode material was too large, the stability of the particle structures of the anode material was reduced, and the expansion of the anode material was significantly increased.

In Comparative embodiment 2-2, after silicon vapor deposition, ball-milling fluidized bed airflow pulverization was performed on the deposit product. Although the average shape coefficient of the anode material was increased, large amount of heat produced during spheroidization, resulting in partial oxidation of the silicon particles in the anode material, and the specific capacity of the anode material reduced. Furthermore, partial anode material was also pulverized during spheroidization, and the side reactions of the anode material were increased, thus affecting the cycling performance of the anode material.

From the test data of Embodiments 2-1 to 2-8, it might be learned that, according to the anode material prepared by suitable preparation processes, the average shape coefficient of the anode material particles was controlled to be maintained within the above range, the problem of stress concentration near the edges and corners due to the volume expansion of the silicon particles in the anode material might be reduced, facilitating the maintaining of the stability of particle structures of the anode material, thereby reducing the pulverization of the particles of the anode material. Gaps among the anode material particles might also be reduced, facilitating the increasing of the compaction density of the anode material and full soaking of the electrolyte, thereby improving the cycling performance of the anode material.

## Claims

1. An anode material, comprising a carbon material and silicon particles, wherein the anode material has pores;
an average shape coefficient of the anode material is F₀, wherein 0.65≤F₀<1; and
the average shape coefficient F₀ of the anode material is obtained through the following manners:
ten anode material particles are randomly acquired, a cross-sectional area Sₙ and a circumference Cₙ of each anode material particle are measured, Fₙ=4*π*Sₙ/Cₙ², wherein n is selected from natural numbers from 1 to 10, an average value of shape coefficients Fₙ of the 10 particles is calculated, and the average value is recorded as the average shape coefficient F₀ of the anode material.

2. The anode material according to claim 1, wherein a N₂ adsorption and desorption method is used to test the anode material and an anode material with the silicon particles removed, and a ratio of a volume of nitrogen absorbed by the anode material at 90% partial pressure to a volume of nitrogen absorbed at 10% partial pressure is A, wherein 1.3≤A≤2.5;
a ratio of a volume of nitrogen absorbed by the anode material with the silicon particles removed at 90% partial pressure to a volume of nitrogen absorbed at 10% partial pressure is B, wherein 1≤B≤1.9, and A/B>1.

3. The anode material according to claim 1, wherein at least a portion of the silicon particles are filled in pores of the carbon material; and/or
the silicon particle comprises at least one of amorphous silicon, crystalline silicon, silicon oxide, silicon alloy, or a complex of the crystalline silicon and the amorphous silicon.

4. The anode material according to claim 1, wherein a total pore volume of the anode material is 0.001 cm³/g-0.4 cm³/g.

5. The anode material according to claim 1, wherein the anode material has at least one of the following features:
(1) the pores of the anode material comprise micropores, wherein a volume proportion of the micropores in all the pores is ≤5%;
(2) the pores of the anode material comprise mesopores, wherein a volume proportion of the mesopores in all the pores is 87%-97%;
(3) the pores of the anode material comprise macropores, wherein a volume proportion of the macropores in all the pores is ≤13%.

6. The anode material according to claim 1, wherein the anode material has at least one of the following features:
(1) a total pore volume of the anode material with the silicon particles removed is 0.2 cm³/g-2.0 cm³/g;
(2) pores of the anode material with the silicon particles removed comprise micropores, wherein a volume proportion of the micropores in all the pores is ≥80%;
(3) in the anode material with the silicon particles removed, a volume proportion of the pores with apertures below 5.0 nm in the total pore volume is ≥90%.

7. The anode material according to claim 1, wherein for a particle size D₅₀ of the anode material, 2 µm≤D₅₀≤20 µm, and 0.9≤(D₉₀-D₁₀)/D₅₀≤5.

8. The anode material according to claim 1, wherein gas production of anode slurry that is prepared by the anode material and placed in a 25 °C environment for 24 hours is ≤1 mL/g, and the gas production of the anode slurry that is prepared by the anode material and placed in a 45 °C environment for 24 hours is ≤2 mL/g.

9. The anode material according to any one of claims 1 to 8, wherein the average shape coefficient of the anode material is F₀, and 0.65≤F₀<0.7.

10. The anode material according to claim 9, wherein an oil absorption value of the anode material is Q₁ mL/100g, and 30≤Q₁≤80; an oil absorption value of the anode material with the silicon particles removed is Q₂ mL/100g, and 120≤Q₂≤200; and (Q₂-Q₁)/Q₁>0.5.

11. The anode material according to claim 9, wherein the anode material has at least one of the following features:
(1) a compaction density of the anode material is 0.80 cm³/g-1.30 cm³/g;
(2) powder conductivity of the anode material at 20 kN is 0.5 S/cm-2 S/cm;
(3) a mass content of carbon in the anode material is 40%-60%;
(4) a mass content of silicon in the anode material is 35%-55%.

12. The anode material according to any one of claims 1 to 8, wherein the average shape coefficient of the anode material is F₀, and 0.7≤F₀≤0.8; a specific surface area of the anode material is S1 m²/g; the total pore volume of the anode material is P1 cm³/g; and C1=S1/(P1*100), and 8≤C1≤20.

13. The anode material according to claim 12, wherein a specific surface area of the anode material with the silicon particles removed is S2 m²/g; the total pore volume of the anode material with the silicon particles removed is P2 cm³/g; and C2=S2/(P2*100), and 10≤C2≤25.

14. The anode material according to claim 13, wherein 0.5≤S1≤10, 0.001≤P1≤0.1; and 1300≤S2≤2500, and 0.5≤P2≤2.0.

15. A battery, comprising the anode material according to any one of claims 1 to 14.
